# EUROPÄISCHE PATENTSCHRIFT

(11) **EP 2 917 426 B1**
(45) Veröffentlichungstag und Bekanntmachung des Hinweises auf die Patenterteilung: **07.06.2023**
(21) Anmeldenummer: 13792621.8
(22) Anmeldetag: 07.11.2013
(51) Int. Cl.: E04B 1/74

(54) **GEBÄUDEHÜLLE UND VERFAHREN ZUR TEMPERATUREINSTELLUNG IN EINEM GEBÄUDE**
BUILDING ENVELOPE AND METHOD FOR SETTING THE TEMPERATURE IN A BUILDING
ENVELOPPE DE BÂTIMENT ET PROCÉDÉ DE RÉGLAGE DE LA TEMPÉRATURE DANS UN BÂTIMENT

(30) Priorität: 08.11.2012 EP 12191811
(43) Veröffentlichungstag der Anmeldung: 16.09.2015
(73) Patentinhaber: IIS Institute for Independent Studies Zürich GmbH, 8001 Zürich (CH)
(72) Erfinder: BERCHTOLD, Julian, 8001 Zürich (CH)
(74) Vertreter: Meissner Bolte Partnerschaft mbB
(86) Internationale Anmeldenummer: PCT/EP2013/073239
(87) Internationale Veröffentlichungsnummer: WO 2014/072386

(56) Entgegenhaltungen:
- EP-A1- 1 223 254
- EP-A1- 1 619 444
- EP-A1- 2 520 870
- DE-A1- 10 132 182
- FR-A1- 2 538 882
- FR-A3- 2 954 970
- JP-A- H07 166 615
- US-A- 4 295 415

## Beschreibung

### Technisches Gebiet

Die Erfindung betrifft eine Gebäudehülle, insbesondere eine Gebäudewand, einen Boden und/oder ein Dach, eines Gebäudes mit mindestens zwei voneinander beabstandeten Schalen, die einen mit Ausnahme von Trage- und/oder Gebäudetechnikelementen im Wesentlichen leeren oder mindestens abschnittsweise mit porösem, offenporigem Material gefüllten, gegenüber dem Außen- und Innenbereich des Gebäudes abgedichteten Zwischenraum zwischen sich einschließen. Sie betrifft des Weiteren ein Verfahren zur Steuerung der Innentemperatur in einem Gebäude, das insbesondere eine Gebäudehülle der genannten Art hat.

### Stand der Technik

Konventionelle Wärmedämmung von Gebäudehüllen ist statisch. Es wird versucht, maximale Dämmwerte bei minimalen Wandstärken zu erreichen. Dies entspricht einer maximalen Entkopplung zwischen Innenraumklima und der Gebäudeumgebung. In den meisten Klimazonen ist dies in Bezug auf den Wärmehaushalt und den Heiz/Kühlenergiebedarf eines Gebäudes nur wenige Tage pro Jahr der ideale Zustand der Gebäudehülle. Zustände entfernt vom Optimum erhöhen den Energie- und Ressourcenverbrauch, was heißt, dass in diesen Fällen Wärme und/oder Kälte über aufwendige, externe Systeme zwischen Innenraum und Umgebung zu- oder abgeführt werden muss.

Erfahrungen mit hochwärmegedämmten Gebäuden haben gezeigt, dass die starke Entkopplung zwischen Innen- und Außenklima nicht automatisch zu energieeffizienteren Gebäuden führt. Die in den letzten Jahren unter Fachleuten geführte Diskussion über hoch wärmegedämmte Gebäudehüllen bei Verwaltungsbauten kamen zum Schluss, dass diese bei hohen internen Lasten eine negative Auswirkung auf die Gesamtenergiebilanz haben können. Der hohe Entkopplungsgrad vom Innen- zum Außenklima führt zu einem überdurchschnittlich hohen Kühlbedarf und einem geringen Heizwärmebedarf. Die Gebäudekühlung erfordert aber - je nach verwendetem System - im Vergleich zum Heizen einen höheren Einsatz von Primärenergie, was zur Ineffizienz bei den meisten Gebäudekategorien beiträgt. Koppelt man jedoch im Kühllastfall das Innenklima an das Außenklima, kann ein Großteil der internen Lasten über die vermindert wärmegedämmte Gebäudehülle direkt und ohne großen technischen Aufwand an die Umgebung abgeführt werden.

Die Funktion einer Gebäudehülle besteht in der Abtrennung eines Gebäudes zwischen dem Gebäudeinnenraum und dessen Umgebung. Relevant sind somit zwei Randbedingungen. Die inneren Randbedingungen (IRB) bestehen aus der Nutzung wie Wohnung, Büro, Serverraum, Maschinen und Anlagen, dem zeitlichen Verlauf der Heiz- und Kühllasten und deren Zyklen sowie den Vorgaben zum Innenraumklima bezüglich Temperatur, Feuchtigkeit und Schall. Die äußeren Randbedingungen (ARB) bestehen aus Bauwerkstatik, Dynamik und mechanischen Einwirkungen, Einwirkungen aufgrund von Wetter und Klima sowie deren zeitlichen Verlaufe wie Wetterphasen, Klimaphasen, Tag- und Nachtzyklen. Die relevanten bauphysikalischen Größen sind Wärme, Feuchtigkeit und Schall, deren zeitlicher Verlauf sowie auch die Gebäudegeometrie. Weiter sind intrinsische Bedingungen (IB) der Gebäudehülle relevant. Diese bestehen aus dem Transmissions- und Speichervermögen der bauphysikalischen Größen innerhalb der Gebäudehülle. Für Wärme sind dies die Wärmedurchgangszahl und die Wärmekapazität, für die Feuchtigkeit die Feuchttransportfähigkeit und dessen Feuchtspeichervermögen sowie für Schall das Transmissionsvermögen. Diese IB sind bestimmt durch Konstruktion, Geometrie und Materialisierung.

Konventionell wird den bauphysikalischen Herausforderungen mit einer Verhinderungs- und Entkopplungsphilosophie begegnet. Dabei werden die bauphysikalischen Einwirkungen aus der Gebäudeumgebung durch die Gebäudehülle möglichst entkoppelt und das Raumklima im Innenraum gesondert über zentrale Systeme aufgebaut. Dies zeigen Forschungstrends, vgl. Proceedings of the 10th International Vacuum Insulation Symposium, Ottawa, CA (2011), und Björn Petter Jelle, Arild Gustavsen, Ruben Baetens, The path to the high performance thermal building insulation materials and solutions of tomorrow, Journal of Building Physics 34 (2) 99, (2010), im Bereich Wärmedämmung und Feuchtigkeitsschutz. Dieser Zugang zur Handhabung der bauphysikalischen Einwirkungen verkennt jedoch den industriellen Trend der Dezentralisierung.

Nebst konventionellen Dämmmaterialien wie Stein- und Glaswolle, Faser- und Schaumstoffe werden vermehrt auch Systeme mit evakuierten Schichten, sog. Vakuumdämmungen, verwendet. Diese zeichnen sich durch eine geringe Schichtdicke bei sehr hoher Wärmedämmleistung aus und bilden bei schwierigen geometrischen Verhältnissen gute Lösungen mit geringer Konstruktionsdicke. All diese Systeme sind jedoch statisch und verlieren aufgrund von Ausdünstungen, Feuchtigkeitseintrag, Verletzungen von deren Hüllen sowie Materialzersetzungen mit der Zeit ihre Dämmwirkung. Ansätze für Gebäudehüllen mit variablem Wärmedurchgang bestehen, vgl. US 3968831 A, DE 3625454 A1, WO 200161118 A1, WO 2010122353 A1, WO 2011146025 A1, WO2011107731 A1, CH703760 A2, DE 102008009553 A1, DE 10006878 A1. Diese können grundsätzlich in die Kategorien 1. Vakuumsysteme, 2. Aktiver Wärmeaustausch und 3. Wandheizungssysteme unterteilt werden. Weiter existieren Systeme mit variablem Wärmedurchgang, die meist nur mit baulichen Maßnahmen realisiert sind (variable Storen und Vordächer, polarisierte Fenstergläser mit sonnenstandabhängigem Wärmedurchgang).

US 4 295 415 A und FR 2 538 882 A1 offenbaren Gebäudehüllen mit zwei Schalen und einem Zwischenraum.

Die zurzeit auf dem Markt befindlichen Systeme orientieren sich im Wesentlichen am Heizwärmebedarf und sind gar nicht oder nur sehr begrenzt in der Lage, den Kühlbedarf zu reduzieren. Folgende Trends sind auszumachen: Grundsätzlich versuchen alle Systeme den Heiz/Kühlenergiebedarf zu reduzieren. Einerseits existiert eine Vielzahl von Konstruktionslösungen, die PCM (Phase Change Materials) einbeziehen.

Anderseits wurden Systeme, hauptsächlich in Panel-Bauweise, vorgeschlagen, die einen Hohlraum zwecks Evakuation der Luft beinhalten, um so die Dämmwirkung variieren zu können. Der technische Aufwand zur Realisierung dieser Systeme ist aber immer noch zu groß, um sich durch die gewonnene Reduzierung des Energiebedarfs zu automatisieren.

Bei Energiebetrachtungen schneidet konventionelle Wärmedämmung in Bezug auf die Graue Energie schlecht ab. Die Herstellung ist ressourcen- und sehr energieintensiv. Hinzu kommt ein volumenintensiver Transport, der wesentlich zur Verschlechterung der Energiebilanz beiträgt.

Betrachtet man die Entwicklung des Raumwärme- und Klimakältebedarfs von Bürobauten der letzten 40 Jahre, so wird klar, dass mit einer Gebäudehülle mit dynamischer Wärmedämmung ein großes Energiesparpotential vorhanden ist, vgl. Gasser, B. Kegel: Gebäudetechnik: Faktor 10. Bau + Architektur 4/5 (2005).

Durch die Verbesserung der Dämmung der Gebäudehülle und die zunehmende Technisierung der Arbeitsplätze ist der Raumwärmebedarf im Sinken begriffen, und der Klimakältebedarf steigt. Es entsteht vermehrt der Zielkonflikt, dass im Winter eine gute Dämmung zur Vermeidung der Transmissionsverluste gewünscht wird, während diese im Sommer kontraproduktiv wirkt (verringerte Auskühlung des Gebäudes vor allem nachts). Durch die dynamische Wärmedämmung besteht die Möglichkeit jeweils den energetisch optimalen U-Wert für den Heiz- respektive Kühlbedarf anzufahren, womit gegenüber der heutigen Situation sowohl der Heiz- als auch der Kühlenergiebedarf reduziert werden kann.

Fazit: Unter der Bedingung möglichst tiefer Heizkosten verschiebt sich für die meisten Gebäudekategorien das Verhältnis zwischen aufgewendeter Heiz- und Kühlenergie zusehends hin zu größerem Kühlenergieaufwand. Dieser erfordert aber einen höheren Einsatz von Primärenergie, was sich negativ auf die Energiekosten auswirkt.

### Darstellung der Erfindung

Der Erfindung liegt die Aufgabe zugrunde, eine weiterentwickelte Gebäudehülle anzugeben, welche insbesondere die Gesamt-Energiebilanz des Gebäudes verbessert. Des Weiteren liegt der Erfindung die Aufgabe zugrunde, ein verbessertes Verfahren zur Einstellung der Innentemperatur in einem Gebäude anzugeben, welches sich ebenfalls durch hohe Gesamt-Energieeffizienz auszeichnet.

Diese Aufgabe wird gemäß relativ selbstständigen Ausprägungen der Erfindung in ihrem Vorrichtungsaspekt durch eine Gebäudehülle mit den Merkmalen des Anspruchs 1 und in ihrem Verfahrensaspekt durch ein Verfahren mit den Merkmalen des Anspruchs 13 gelöst. Zweckmäßige Fortbildungen des Erfindungsgedankens sind Gegenstand der jeweiligen abhängigen Ansprüche.

Die Erfindung sucht den Zugang zur Bewältigung der bauphysikalischen Herausforderungen über eine Kontroll- und Steuerungsphilosophie zu erreichen. Dabei wird versucht, die Auswirkungen nicht zu verhindern, sondern sie in das Konzept einer Gebäudehülle einzubinden und sie kontrolliert zu steuern. Die bauphysikalischen Auswirkungen sind an das System gekoppelt und deren Handhabung wird dezentral bereitgestellt. Weiter werden die variablen und dynamischen Intrinsischen Bedingungen und die inneren und äußeren Randbedingungen für den Wärmehaushalt eines Gebäudes ausgenutzt.

Der Anwendungsbereich einer solchen Gebäudehülle, die einen kontinuierlich steuerbaren Wärmedurchgang besitzt, liegt hauptsächlich in Bauwerken, Gebäuden und Anlagen mit komplexem und anspruchsvollem Wärmehaushalt oder mit erhöhter Schall-Exposition. Einerseits sind dies Bauten, Bauwerke, Gebäude oder Anlagen (auch Maschinenhüllen, in Extrema auch z.B. Schiffsrümpfe), die eine Vielzahl an Funktionen zu erfüllen haben und/oder extremen äußeren und inneren Bedingungen ausgesetzt sind. Diese können externe Einwirkungen wie Wetter, Klima oder mechanische Belastungen beinhalten oder aus internen Einwirkungen durch Prozesse oder Anwendungen mit starken Temperatur-, Feuchte-, Schall- oder Staubeinflüssen bestehen. Speziell zu erwähnen sind Gebäudehüllen für mobile Systeme (im Gegensatz zu immobilen Systemen wie Bauwerke und Gebäude) wie modulare Rechenzentren, Serverräume und Labors, die auf einem Standard ISO-Container aufbauen oder eine ähnliche, modulare Geometrie besitzen.

Die Anwendung der Gebäudehülle mit kontinuierlich steuerbarem Wärmedurchgang für Maschinen und Anlagen ermöglicht es, deren Wärme- und Kühlleistungsbedarf direkt über ihre Hülle zu realisieren, die im Wärmeaustausch mit der Umgebung steht. Damit können aufwendige externe Heiz- und Kühlsysteme auf ein Minimum reduziert werden. Weiter bietet die zwei- oder mehrschalige Ausführung der Konstruktion wesentliche Vorteile in Bezug auf Schalldämmung. In Kombination mit porösen Strukturen kann sie als Schutz- oder Sicherheitshülle von Gebäuden und Anlagen (Explosionsschutz etc.) Anwendung finden.

Eine weitere Optimierung dieses Systems einer Gebäudehülle, den Heizwärmebedarf zu reduzieren, ergibt sich, indem der Wärmedurchgang durch sie hindurch als Ganzes gezielt gesteuert wird. Dadurch besteht im Heizbetrieb die Möglichkeit, Wärme von südorientierten, besonnten Fassadenbereiche in das Gebäude zu leiten und bei nachlassendem Wärmeeintrag die Gebäudehülle wieder optimal zu dämmen und vom Außenklima zu entkoppeln. Weiter liefert die Integration des Systems in die konventionelle Gebäudetechnik ein weites Feld von Energiesparmöglichkeiten im Gebäudebereich.

Aufgrund der Überlegung, ein System mit variablem und steuerbarem Entkopplungsgrad als Trennbauteil zwischen Außen- und Innenklima eines Gebäudes zu entwickeln, ist aus heutiger Sicht eine zweischalige Konstruktion die bevorzugte Lösung. Für die Umsetzung des Systems werden einerseits neuartige Abdichtungssysteme für die Oberflächen und Anschlüsse benötigt, die vielfältige Anforderungen wie die Elastizität, der Haftverbund, die Dauerhaftigkeit und Temperaturbeständigkeit zu erfüllen haben. Hinzu kommt die richtige Dimensionierung und Ausgestaltung der Abdichtungsstellen. Anderseits erfordern die neu auftretenden statischen und dynamischen Lasten innerhalb der Gebäudehülle einen leistungsfähigen Baustoff, der eine vielseitige Konstruktion in einem wirtschaftlichen Herstellungsverfahren ermöglicht. Weiter benötigt das System ein Steuerungsverfahren, das eine Vielzahl an neu entstehenden Effekten wie Temperaturgradienten, unterschiedliche Feuchtgehalte und Phasenübergänge innerhalb der Gebäudehülle zur Handhabung des Wärmehaushalts eines Gebäudes auszunutzen vermag. All diese Aspekte, zusammengefasst in einem System mit dynamischer Wärmedämmung und Wärmeaustausch, können zu einer signifikanten Reduktion des Heiz- und Kühlenergiebedarfs eines Gebäudes führen.

Der grundsätzliche Innovationsgehalt dieses Systems einer Gebäudehülle liegt darin, durch die temporäre Erhöhung des Wärmedurchgangs in der Gebäudehülle eines Bauwerks, den Heiz-/Kühlenergiebedarf generell zu senken. Der Wärmeaustausch wird direkt über die Oberfläche eines Gebäudes bewerkstelligt und für dessen Wärmehaushalt ausgenutzt. Das System besitzt einen variablen, kontinuierlich steuerbaren U-Wert und wirkt aktiv auf den Wärmehaushalt ein. Die anfallenden Feuchtigkeiten werden kontrolliert aus der Konstruktion entfernt und es bestehen keine negativen Einflüsse wie Materialzersetzungen auf den Dämmwert. Es können durch die orientierungsabhängige Aufteilung der Gebäudehülle in einzelne Sektoren eine Vielzahl an Effekten (z.B. Temperaturgradienten innerhalb der Gebäudehülle) für den Wärmehaushalt ausgenutzt werden. Das System ist durch die neuartige Kombination von verschiedenen Technologien und Verfahren realisiert.

Das hier vorgestellte System wird auf die Vorgaben von Nutzung (interne Lasten) und Standort (Klimazone) optimiert. Dies reduziert die konventionelle Gebäudetechnik. Weiter werden für die Bedienung des Wärmehaushalts eines Gebäudes bestehende und induzierte physikalische Effekte innerhalb der Gebäudehülle durch dezentrale Kopplung an die Gebäudetechnik ausgenutzt. Das System fasst die Komponenten: 1) Aktiver Wärmeaustausch und 2) Wandheizungssysteme in verschiedenen Optionen zusammen und umfasst konkrete Lösungen zur Konstruktion, zur Versorgungstechnik und zum Betrieb des Gebäudes.

Das Konzept beschreibt ein System einer Gebäudehülle/Fassade und beinhaltet eine zwei- oder mehrschalige Konstruktion, eine Versorgungstechnik sowie ein Verfahren, welches das beliebige Verändern, Kontrollieren und Steuern des Wärmedurchgangs durch die Gebäudehülle hindurch erlaubt (keine vorgehängten Panels). Im Zwischenraum der Konstruktion, der entweder als Hohlraum ausgebildet oder mit geeigneten, porösen, offenporigen Materialien ausgefüllt ist, kann wahlweise eine Wärmeleitflüssigkeit eingebracht werden (Wärmedurchgang maximieren). Die dadurch realisierte Gebäudehülle mit dynamischem U-Wert besitzt einen variablen Entkopplungsgrad zwischen Innenraumklima und Umgebung. Der Wärmehaushalt kann damit direkt über die Gebäudeoberfläche bewerkstelligt werden. Die zu lösenden technischen Herausforderungen sind grundsätzlich das Dichten und Abdichten von Flächen, Anschlüssen, Fugen und Durchdringungen. Dazu müssen Detail-, Fugen- und Flächendichtungen neu entwickelt, materialisiert und bemessen werden. Zusätzlich wird eine neuartige Versorgungstechnik benötigt, wobei versucht wird, Haustechnikkomponenten von bestehenden Systemen zu integrieren.

Das hier vorgestellte System nimmt über die Gebäudehülle direkt Einfluss auf den Heiz- und Kühlwärmebedarf und ermöglicht zudem die Kopplung an konventionelle gebäudetechnische Komponenten. Damit können zusätzliche Effekte (Temperaturgradienten innerhalb der Wände, Phasenübergänge im Zwischenraum) ausgenutzt werden, was das Energiesparpotential weiter erhöht und so dessen technischen Aufwand zur Realisierung lohnenswert macht. Das Gebäude wird als System betrachtet, wobei die Gebäudehülle, bestehend aus Konstruktion, Versorgungstechnik und Steuerungsverfahren, eine Systemkomponente bildet. Darin enthalten ist der Ansatz, zusätzliche Freiheitsgrade über integrierte Kapazitäten (Wärme, Vakuum) und Wärmetransportmedien (Flüssigkeiten) zu erhalten. Dies erlaubt die maximale Ausnutzung der Systemzustände für den Wärmehaushalt eines Gebäudes.

Im Allgemeinen soll an dieser Stelle klargestellt werden, dass sich die vorliegende Erfindung nicht konkret mit der Lüftung, dem Luftstrom oder einer Hinterlüftung befasst, sondern es darum geht, einen Wärmedurchgang durch eine Wandkonstruktion passiv oder aktiv mittels der weiter unten im Detail erläuterten Vorrichtungen und Strukturen zu beeinflussen bzw. zu steuern. Es geht nicht darum, eine Wandschale zu beheizen bzw. zu kühlen (und dann zu "warten", wie sich ein Wärmestrom innerhalb der Gebäudehülle ausbreitet), sondern der Wärme von außen nach innen soll (aktiv oder passiv) gesteuert werden. Es handelt sich also vorzugsweise um geschlossene Systeme, die geschlossene Kreisläufe aufweisen. Der vorliegende Erfindungsgegenstand beschäftigt sich mit einer Anpassung auf eine konkrete Nutzung bzw. Klimazone, wobei berücksichtigt wurde, dass grundsätzlich ein Konflikt bzgl. der konkreten Konstruktion und einer Heiz- bzw. Kühlfunktion besteht (was weiter unten noch im Detail erläutert wird). Weiterhin sei angemerkt, dass es bei der vorliegenden Erfindung nicht um eine Wärmespeicherung innerhalb einer Wand geht, sondern um den Wärmetransport von außen nach innen (beispielsweise von einem äußeren Wärmekollektor in ein Gebäudeinneres).

Die folgenden Ausführungen zur Beschreibung des Systems können in zwei Aspekte unterteilt werden. Einerseits werden Lösungen zur Beeinflussung und Steuerung des Wärmedurchgangs (Erhöhen/Erniedrigen) durch die Konstruktion hindurch beschrieben. Anderseits werden Maßnahmen und Vorrichtungen vorgestellt, die zur Erhöhung oder Erniedrigung des Wärmeübertrags (Wärmeaufnahme/Abgabe) an den Oberflächen der Konstruktion mit der Umgebung beitragen.

Die Konstruktion besteht grundsätzlich aus (mindestens) zwei beabstandeten Schalen, welche einen auf Distanz fixierten Zwischenraum begrenzen. Dieser wird mittels eines porösen, offenporigen Materials ausgefüllt oder bildet mit Hilfe von Distanzhaltern einen Hohlraum. Der Zwischenraum kann mit einer Wärmeleitflüssigkeit befüllt/entleert werden. Die Schalen, die eine Wand-, Decken- oder Bodenkonstruktion in Bauwerken oder ein Gehäuse einer Anlage oder Maschine bilden, sind aus einem vorgängig losen, fließfähigen oder flüssigen, sich kurz nach dem Einbau in eine formgebende Schalung/ Gussform verfestigenden Baustoff gefertigt, der nach einer gewissen Zeit aushärtet und seine volle Festigkeit erhält (Pulver, Pellets, Staub, Beton, Kunstharz etc.).

Auf diese Weise ist es möglich, die Konstruktion mit Hilfe einer Bewehrung (Verstärkung, Armierung) in nahezu beliebigen Bauformen und schlanken Bauweisen zu realisieren. Ebenso können Zubringerleitungen, Rohre, Kabel etc. sauber verlegt, eingegossen und verbaut werden. Im Endzustand muss der Baustoff mindestens flüssigkeitsdicht sein. Er kann, mit speziellen Zusätzen versetzt, die geforderten Eigenschaften erhalten. Spezielle Beachtung verdient die Verhinderung oder Verminderung der Schwindrissbildung beim Abbindeprozess. Die Schalen der Konstruktion dienen hauptsächlich der Statik und der Aufnahme der dynamischen Lasten, sie können aber auch eine Vielzahl an weiteren Funktionen wie Transport, Speicherung und Austausch von Wärme und Feuchtigkeit oder Schutz vor mechanischen Einwirkungen übernehmen. Zur Verbesserung der statischen und dynamischen Eigenschaften kann der Baustoff entweder mit Fasern/Drähten oder mit Kunststoffen/Zusätzen versetzt oder mittels Bewehrung (Stahl, Stäbe aus verschiedenen Materialien) oder Spannkabel verstärkt werden.

Da mit dem System vor allem der Bau von schlanken Konstruktionen sowie auch Hüllen für Maschinen und Anlagen beabsichtigt wird, muss eine weitere Bewehrungsart in Betracht gezogen werden - die statisch und dynamische Verbindung einer vollflächigen, äußeren Bewehrung mit dem Baustoff.

(Verbindung Blech - Beton). Dabei kann das vollflächige Material auf der einen Seite Einschlüsse, Poren oder Ausbuchtungen aufweisen oder mit einem porösen, offenporigen Bindematerial, einem Vlies oder feinmaschigen Gitter versehen werden. Die statisch, dynamische Verbindung entsteht nun damit, dass der Baustoff während dem Einbauprozess in die offenen Poren hinein fließt, aushärtet und sich mit dem vollflächigen Material verbindet. Nebst richtungsdefinierten Lasten kann diese Art der Bewehrung auch richtungsundefinierte Lasten aufnehmen (Schwingungen, Vibrationen etc.) und so der Konstruktion weitere Festigkeit verleihen.

Die Konstruktion kann weiter mit Hilfe einer Stahlbewehrung vorgespannt werden. Dies dient einerseits der Verbesserung der statischen und dynamischen Eigenschaften des Baustoffs oder trägt zur Verminderung der Schwindrissbildung bei. Dazu wird die Stahlbewehrung mit einem wärmeisolierenden Oberflächenanstrich versehen und vor dem Einbauprozess aufgeheizt (z.B. durch elektrischen Strom). Beim Einbauprozess muss nun ein Temperaturunterschied zwischen dem Baustoff und der Stahlbewehrung solange aufrecht erhalten werden, bis der Baustoff beginnt, Festigkeit aufzubauen. Durch das darauffolgende, verzögerte Abkühlen beider Medien kann aufgrund von unterschiedlichen Längenausdehnungen eine Vorspannung erreicht werden.

In die zwei Schalen und/oder dem Zwischenraum werden Messapparaturen und Sensoren (Temperatur, Feuchtigkeit, Beschleunigung, Vibration etc.) verbaut, um Eingangssignale für die Steuerung des Systems zu erhalten (Steuerungsverfahren). Im Übrigen besteht die Konstruktion aus einem Baustoff, versetzt mit speziellen Zusätzen und einer Bewehrung.

Um die Funktionsweise und die Eigenheiten des Systems zu beschreiben, sei hier ein kurzer Überblick zum Aspekt der Wärmeleitung und Wärmedämmung angegeben. Der Wärmetransport in Dämmmaterialien erfolgt über die Wärmeleitung a.) der enthaltenen Luft, Gas, b.) des Festkörpergerüsts des Dämmmaterials und c.) der Wärmestrahlung. Der Hauptanteil des Wärmetransports in Dämmstoffen erfolgt über die enthaltene Luft/Gas, durch Konvektion, Gaswärmeleitung und freie Molekularströmung. Wird das Dämmmaterial (in diesem Fall bezeichnen wir es als Stützmaterial) evakuiert, muss der Zusammenhang zwischen Wärmeleitfähigkeit des porösen, offenporigen Dämm-/Stützmaterial und dem inneren Luft- und/oder Gasdruck beachtet werden.

Wird der Wärmeleitungsanteil über die Gasphase durch Evakuieren stark verringert (Vakuumdämmungen mit tiefen Wärmeleitzahlen λ<0.01 W/mK), so kann der Anteil des Wärmetransports über die Wärmestrahlung nicht mehr vernachlässigt werden. In diesem Fall müssen spezielle Vorkehrungen zur Abschirmung der Wärmestrahlung unternommen werden. Die Wärmeleitung über das Festkörpergerüst des Dämmmaterials kann nur wenig beeinflusst werden. Die Möglichkeiten zur weiteren Reduktion des Wärmedurchgangs sind somit begrenzt.

Die Relation zwischen Porengrösse und innerem Gasdruck des Stützmaterials und der daraus resultierenden Wärmeleitfähigkeit einerseits soll mit der Nutzung und Klimaexposition des Gebäudes anderseits ausgelegt und optimiert werden soll. Der Zwischenraum der zwei- oder mehrschaligen Konstruktion kann nun grundsätzlich auf verschiedene Arten ausgebildet werden.

Um die Wärmeleitung durch Konvektion zu minimieren, kann der Zwischenraum mit einem porösen, offenporigen Dämm-/Stützmaterial ausgefüllt werden, welches auf Zug und Druck mit den Schalen verbunden ist. Das poröse, offenporige Stützmaterial im Zwischenraum kann aus vorfabrizierten Platten aus einem Hartschaumstoff oder ein aus Fasern (Glasfasern, Kunstfasern) und einem Bindemittel/Kleber (Beton, Kunstharz) hergestellten Verbundmaterial bestehen, das in einer Weise aufgetragen wird (in Plattenform oder direkt auf die Konstruktion, Bewehrung), dass das verfestigte Material die Lasten aufnehmen kann und offenporig ist. In Zukunft kann man sich auch ein additives Verfahren (3-D printing) zur Herstellung des porösen, offenporigen Stützmaterials vorstellen, um die aufgrund der Auslegung des Systems vorgegebene Porengrösse zu erreichen. Während dem Einbringen des Baustoffs in die Schalung/Gussform muss sichergestellt werden, dass dieser nur soweit in die Poren des Distanz haltenden Stützmaterials eindringt, bis dass der Haftverbund gewährleistet ist.

Um anderseits die Wärmeleitung mittels Wärmeleitflüssigkeit im Zwischenraum zu erhöhen und einen schnellen Wechsel der Zustände im Zwischenraum zu ermöglichen, kann dieser als Hohlraum ausgebildet werden, welcher mit Hilfe von Distanzhaltern auf Distanz stabilisiert und fixiert wird. Die resultierenden Kräfte im Zwischenraum bestimmen Dimensionierung, Materialisierung und die Verteilung der Distanzhalter pro m² in der Fläche. Einerseits können dies Hülsen, Voll- oder Hohlstäbe aus einem Material mit möglichst hoher Festigkeit und möglichst geringer Wärmeleitfähigkeit sein. Anderseits kann der Distanzhalter als ein sog. Distanzkörper ausgebildet sein. Dies kann z.B. ein vorgängig evakuierter, mit Kunstharz versiegelter Hartschaumstoff sein, der die benötigte Festigkeit aufweist und einen geringen Wärmeleitkoeffizienten besitzt. Die Verankerung der Distanzhalter in den Schalen erfolgt mittels eines vorgängig in die Schalen eingebauten Verankerungskörpers, der nach dem Einbau des Baustoffs durch diesen fixiert ist. Die Distanzhalter müssen folgende Funktionen übernehmen: Einerseits müssen sie die statischen sowie dynamischen Zug- und Druckkräfte, die aufgrund der unterschiedlichen physikalischen Zustände im Zwischenraum entstehen, aufnehmen und die Schalen auf Distanz fixieren. Da die Distanzhalter eine konstante Wärmebrücke in der Konstruktion bilden, sollen sie anderseits eine möglichst geringe Wärmeleitfähigkeit besitzen und möglichst punktförmige Kontakte mit den Schalen bilden. Dies wird mit einem Material mit hoher Festigkeit und geringer Wärmeleitfähigkeit erreicht, um die Ausführung möglichst schlank gestalten zu können. Darüber hinaus müssen die Distanzhalter zusätzlich die Schalung/Gussform während dem Einbauprozess fixieren und die Schalungsdrücke des flüssigen Baustoffs und des Stützmediums aufnehmen.

Eine dritte Variante zur Ausbildung des Zwischenraumes ist eine Kombination der zwei vorhergehenden Konstruktionsarten. Dieser wird nun mit einem geschlitzten oder gefalzten porösem, offenporigen Stützmaterial ausgeführt, welches dadurch ebenfalls Hohlräume zum Evakuieren oder Befüllen mit einer Flüssigkeit besitzt. Diese Konstruktionsart erlaubt es, unterschiedliche und gemischte Zustände im Zwischenraum zu induzieren, um die Gas- und Konvektionswärmeleitfähigkeit zu optimieren.

Es zeigt sich nun, dass sich das System Dynamische Wärmedämmung und Wärmeaustausch grundsätzlich in einem Zielkonflikt befindet. Einerseits wird versucht, den Wärmedurchgang durch die Konstruktion mittels Einbringung einer Wärmeleitflüssigkeit im Zwischenraum zu erhöhen und einen schnellen Wechsel der Zustände zu erreichen. Dies kann mit der Ausführung des Zwischenraumes als Hohlraum erreicht werden. Wird dieser jedoch evakuiert, resultiert aufgrund der Geometrie nur ein moderater Wärmedämmwert. Wird anderseits der Zwischenraum mit einem porösen, offenporigen Stützmaterial zwecks Minimierung des Wärmedurchgangs ausgefüllt und evakuiert, können die Zustände im Zwischenraum aufgrund der Porengröße nur langsam verändert werden. Zusätzlich ist das Einbringen einer Wärmeleitflüssigkeit nur begrenzt angebracht, da diese nur schwer wieder vollständig entfernt werden kann (verbleibende Restfeuchtigkeit). Dies führt unweigerlich dazu, dass das System bezüglich Nutzung und Klimazone speziell ausgelegt werden muss. Die Wahl und Bestimmung der Porengröße des Stützmaterials sowie die Ausgestaltung des Zwischenraumes soll aufgrund von Energieabschätzungen zu Nutzung und Klimazone bestimmt und optimiert werden, damit eine optimale U-Wertbandbreite erreicht wird.

Die auf die Schalen und Distanzhalter wirkenden Kräfte, die durch die verschiedenen Zustände im Zwischenraum hervorgerufen werden, betragen 1 Mp/m² auf Zug pro Meter Wassersäule. Hinzu kommen dynamische Lasten, die durch den Wechsel von Flüssigkeit hervorgerufen werden. In jedem Fall muss das distanzstabilisierende und fixierende Material im Zwischenraum (Stützmaterial, Distanzhalter) die resultierenden Kräfte aufnehmen. Um den Wärmetransport durch die Konstruktion hindurch weiter erhöhen zu können, muss auch der Wärmeübertrag (die Wärmeaufnahme oder Wärmeabgabe) von der Gebäudehülle an die Umgebung verbessert werden. Dies geschieht grundsätzlich mit der Erhöhung der Oberfläche. Im Falle, dass die Konstruktion mit Beton o. ä. ausgeführt ist, kann dieser in Waschbetonweise ausgeführt oder auch sandgestrahlt werden. Besteht die Oberfläche aus einem Blech o.ä., kann dieses als Ripp- oder Wellblech ausgeführt sein. Zusätzlich kann mit einem wärmeabsorbierenden oder wärmedesorbierenden Farbanstrich der Gebäudeoberfläche die Wärmeabgabe und den Wärmeübertrag beeinflusst werden (optimal sind farbwechselnde Anstriche). Weiter können mit dem Benetzen der Gebäudeoberfläche mit Wasser o. ä. die resultierenden Wärmebeträge durch Verflüssigen/Verdampfen den Wärmeübertrag an der Oberfläche weiter erhöhen. In all diesen Fällen muss sichergestellt werden, dass die Gebäudeumgebung den Zugluft-Strom und den Austausch des Luftvolumens nicht beeinträchtigt.

Eine Ausführung der Konstruktion besteht in der Untertrennung und Unterteilung der Gebäudehülle eines Bauwerks oder einer Anlage in einzelne Sektoren oder orientierungsabhängige Teile und Flächen. Dabei kann sich die Ausgestaltung des korrespondierenden Zwischenraumes (Porengrösse Stützmaterial, Geometrie) zwischen den einzelnen Sektoren unterscheiden.

Grundsätzlich wird damit der Zwischenraum mittels einer Konstruktionshilfe in einzelne Abteile und Sektoren unterteilt, die untereinander abgetrennt sind und deren innere Zustände im Zwischenraum unabhängig voneinander variiert werden können (Wärmeleitflüssigkeit). Dies dient dem Ausnützen orientierungsabhängiger Ausrichtungen der Gebäudehülle (Außenseite besonnt oder beschattet, unterschiedliche Nutzungen auf der Innenseite) und wird mit Hilfe des Steuerungsverfahrens für den Wärmehaushalt des Bauwerks oder der Anlage ausgenutzt. Um die Effekte (gebäudehülleninterne Gradienten von Temperatur und Druck) noch weiter auszunutzen, können die zu den einzelnen Sektoren korrespondierenden Oberflächen mit den Maßnahmen zur Erhöhung des Wärmeübertrags an der Gebäudeoberfläche, wie im vorhergehenden Abschnitt beschrieben, angewendet werden. Die Trennfläche zwischen dem Zwischenraum und den Schalen kann mit einer Folie oder Kunststoffbahn, einem Blech, mit einem Harz oder Kleber versiegelt oder mit einer Flächendichtung, die sich mit dem Baustoff verbindet, ausgeführt sein.

Eine weitere Ausführung der Konstruktion beinhaltet ein in einer oder beiden Schalen verlegter Rohrkreislauf (z.B. Aluplast-Bodenheizungsrohre), der mit einer Wärmetransportflüssigkeit mittels Flüssigkeits- oder Umwälzpumpen durchströmt werden kann, um Wärme in den Schalen auszutauschen und deren wärmespeicherwirksame Masse für den Wärmehaushalt des Bauwerks auszunutzen. Die Rohre können stern-, kreis-, spiral- oder schlaufenförmig in den Schalen der Konstruktion angeordnet sein. Bei der Anordnung von mehreren, verschiedenen Kreisläufen innerhalb der Gebäudehülle können zusätzlich auftretende Temperaturgradienten gegeneinander ausgenutzt und als Wärmequellen oder Senken im Zusammenhang mit der Kopplung an die konventionelle Gebäudetechnik eingesetzt werden (Wärmepumpen, Kühlanlagen).

Zusätzlich kann bei Verwendung von permeablen Rohren kontrolliert Feuchtigkeit in die Konstruktion eingebracht werden, die bei Durchtritt an deren Oberfläche verdunstet. Die freiwerdende Verdunstungswärme kann zusätzlich für den Wärmehaushalt des Gebäudes ausgenutzt werden. Die permeablen Rohre können auch im Zwischenraum, eingebettet im Stützmaterial, angebracht werden. In dieser Ausführung kann durch sie auch Feuchtigkeit in das Stützmaterial eingebracht werden. Dies induziert physikalische Effekte wie eine erhöhte Wärmeleitung, ein besseres Wärmestrahlungsverhalten sowie eine höhere Wärmekapazität innerhalb des Stützmaterials.

Gem. einem bevorzugten zusätzlichen Aspekt der Erfindung wird eine Gebäudehülle vorgeschlagen, insbesondere eine Gebäudewand, ein Boden oder ein Dach eines Gebäudes, mit mindestens zwei voneinander beabstandeten Schalen, die einen mit Ausnahme von Trage- und/oder Gebäudetechnikelementen im Wesentlichen leeren oder mindestens abschnittsweise mit porösem, offenporigen Material gefüllten, gegenüber dem Außen- und Innenbereich des Gebäudes abgedichteten Zwischenraum zwischen sich einschließen, wobei im Zwischenraum eine Vielzahl von ersten Teilrohren angeordnet ist, die mit einem Wärmekollektor auf der dem Außenbereich zugewandten Schale verbunden sind und im Zwischenraum enden. Vorzugsweise ist im Zwischenraum eine Vielzahl von zweiten Teilrohren angeordnet, die mit der dem Innenbereich zugewandten Schale, insbesondere einem Wärmekollektor auf der dem Innenbereich zugewandten Schale verbunden sind und im Zwischenraum enden, wobei ein erstes Teilrohr mit einem zweiten Teilrohr ein Wärmerohr ausbildet.

Ein Kerngedanke dieses Aspektes liegt darin, dass durch die Teilrohre ein (regulierbarer) Wärmetransport von dem Außen- und Innenbereich (und umgekehrt) erfolgen kann. Wesentlich ist hierbei, dass ein Zwischenraum abgedichtet ist. Dadurch kann ein (Wärmeleit-) Fluid in den Zwischenraum eingefüllt werden. In Kombination mit dem (Wärmeleit-) Fluid kann eine (regulierbare) Wärmeleitung ermöglicht werden, dadurch dass das (Wärmeleit-) Fluid in den Zwischenraum eingefüllt wird, so dass es an das erste Teilrohr bzw. das Wärmerohr (umfassend das erste und zweite Teilrohr) angrenzt. Bei dem vorliegenden Aspekt geht es also nicht darum, Rohre vorzusehen, um eine Wärmespeicherung innerhalb der Gebäudehülle zu ermöglichen, sondern um einen Wärmetransport von einem Außenbereich (insbesondere äußeren Wärmekollektor) zu einem inneren Bereich (insbesondere inneren Wärmekollektor) zu ermöglichen. Vorzugsweise sind die beiden einander zugeordneten Teilrohre daher als zwei ineinander greifende Teilrohre ausgebildet.

In einer konkreten Ausführungsform ist ein Endabschnitt je eines zweiten Teilrohrs innerhalb eines Endabschnitts eines zugeordneten ersten Teilrohres (berührungslos) angeordnet. Alternativ kann ein Endabschnitt je eines ersten Teilrohrs innerhalb eines Endabschnitts eines zugeordneten zweiten Teilrohres (berührungslos) angeordnet sein. Die Teilrohre greifen dabei vorzugsweise ineinander. Bevorzugt ist eine Beabstandung der zugeordneten Endabschnitte voneinander. Dadurch bleibt ein Verbindungsraum, der durch die Beabstandung der Endabschnitte gebildet wird, vorzugsweise frei (so dass sich die zugeordneten Endabschnitte nicht berühren). In einem derartigen Fall ist es von Vorteil, wenn ein (Wärmeleit-) Fluid über den Verbindungsraum in die Teilrohre eindringen kann, so dass eine Wärmeleit-Verbindung zwischen den Endabschnitten realisiert ist. Die Regelung der Wärmeleitung erfolgt dann vorzugsweise dadurch, dass der Verbindungsraum wärmeleitmäßig durch das (Wärmeleit-) Fluid, insbesondere eine Wärmeleitflüssigkeit überbrückt wird (oder eben nicht - durch Entfernen des Fluids). In einer konkreten Ausführungsform kann der Verbindungsraum auch eine (wärmeisolierende) Dichtung aufweisen. Dadurch wird eine fluidleitende Verbindung zwischen den einander zugeordneten Teilrohren ermöglicht, so dass das entsprechende Wärmerohr einen Fluidtransport (insbesondere einen Fluidkreislauf) realisieren kann. Insbesondere in einem solchen Fall kann im ersten und/oder zweiten Teilrohr eine Flüssigkeitspumpe angeordnet sein, über die eine Strömungsgeschwindigkeit einer Flüssigkeit und somit ein Wärmeübertrag geregelt werden kann. In einer konkreten strukturellen Ausführungsform ist je ein Endabschnitt eines zweiten Teilrohres konzentrisch innerhalb eines zugeordneten Endabschnitts eines ersten Teilrohres angeordnet. Umgekehrt kann auch je ein Endabschnitt eines ersten Teilrohres konzentrisch innerhalb eines zugeordneten Endabschnitts eines zugeordneten Endabschnitts eines zweiten Teilrohres angeordnet sein.

In einer weiteren Ausführungsform wird durch das Wärmerohr ein mit der äußeren und inneren Schale wechselwirkender Fluidkreislauf realisiert. Das Wärmerohr kann einen zentralen Rohrabschnitt aufweisen, der vorzugsweise innerhalb eines doppelwandigen zweiten Rohrabschnitts (zur Rückführung eines zirkulierenden Fluids) liegt.

In verfahrensmäßiger Hinsicht kann eine Regelung der Wärmedurchleitung folgendermaßen erfolgen. Das (Wärmeleit-) Fluid kann zur Erhöhung der Wärmedurchleitung in einander zugeordneten Teilrohren eingebracht werden.

Alternativ und zusätzlich kann eine Flüssigkeitsoberfläche eines als Flüssigkeit ausgebildeten Fluids auf Höhe (einander zugeordneter) Teilrohre oder oberhalb der (einander zugeordneter) Teilrohre oder oberhalb der (einander zugeordneten) Teilrohre eingestellt werden. Zur Erniedrigung der Wärmedurchleitung kann ein (Wärmeleit-) Fluid aus den Teilrohren entfernt werden. Alternativ oder zusätzlich kann eine Flüssigkeitsoberfläche eines als Flüssigkeit ausgebildeten Fluids auf Höhe der (einander zugeordneten) Teilrohre oder oberhalb (der einander zugeordneten) Teilrohre eingestellt werden.

Eine weitere Ausführung der Konstruktion beinhaltet sog. Wärmerohre oder Heat-Pipes, die den Wärmedurchgang durch die Konstruktion hindurch weiter erhöhen können. Es sind grundsätzlich zwei, mit einem gewissen Abstand konzentrisch angeordnete und ineinander führende Rohre (gefertigt aus einem gut wärmeleitenden Material wie Aluminium, Kupfer oder Chromstahl), die mit einem Wärmekollektor auf der Außenseite der Schalen verbunden sind und durch die Schalen hindurch bis in den Zwischenraum hineinragen. Wichtig dabei ist, dass sie sich nicht berühren und nur zu einem gewissen Teil in den Zwischenraum hineinragen. Die Wärmekollektoren (gefertigt aus einem gut wärmeleitenden Blech), auf der Außenseite der Konstruktion angeordnet, stehen nun in direktem Wärmeaustausch mit der unmittelbaren Umgebung und können auch die Wärme der direkten Sonneneinstrahlung an das an ihnen verbundene, in die Schalen und den Zwischenraum hineinragende Rohr weiterleiten. Solange nun der Zwischenraum evakuiert ist, besteht keine wärmeleitende Verbindung zwischen den beiden Rohren. Wird nun der Zwischenraum mit der Wärmeleitflüssigkeit befüllt, entsteht dadurch ein erhöhter Wärmeübertrag von einem Heat-Pipe-Rohr auf das andere. Diese Anordnung bildet damit eine passive Wärmebrücke innerhalb der Konstruktion und erhöht dadurch den Wärmedurchgang. Im Speziellen überbrücken die Heat-Pipes den Wärmeübertrag der Trennschicht zwischen der Schale und dem Zwischenraum. Wird der Zwischenraum nun wieder von der Wärmeleitflüssigkeit entleert, verschwindet der zusätzliche Effekt zur Wärmeübertragung innerhalb der Konstruktion. Da sich die Heat-Pipe-Rohre nicht berühren, bilden sie auch keine Wärmebrücke in der Konstruktion mehr. Die Funktion der Heat-Pipes ist abhängig von zwei Niveaus der Wärmeleitflüssigkeit im Zwischenraum der Konstruktion. Liegt das Niveau unterhalb der Heat-Pipes, besteht kein erhöhter Wärmedurchgang. Liegt das Niveau oberhalb der Heat-Pipes, besteht ein erhöhter Wärmedurchgang. Für eine verbesserte Entleerung der Heat-Pipes durch die Wärmeleitflüssigkeit können diese entweder konisch oder mit Entleerungslöchern versehen werden. Um den Wärmeübertrag durch die Wärmeleitflüssigkeit zu verbessern und zu erhöhen, kann diese mit einem Wärmeleitmaterial versetzt und angereichert werden. Es bietet sich an, den Distanzhalter in Verbindung mit der Heat-Pipe auszuführen. Um den Wärmeübertrag der Wärmekollektoren weiter zu erhöhen, können die vorgenannten Maßnahmen zur Erhöhung des Wärmeübertrags an den Oberflächen angewendet werden.

Das Konzept der Heat-Pipes kann innerhalb des Systems Dynamische Wärmedämmung und Wärmeaustausch weiter ausgebaut werden. Thermodynamisch existieren folgende Prinzipen des Wärmetransports innerhalb einer Gebäudehülle:
- Passive Wärmeleitung (Festkörper-Wärmeleitung durch die Konstruktion und deren Vorrichtungen, Wärmeübergänge an deren Ober- und/oder Trennflächen),
- Aktiver Wärmetransport (Konvektion, Hinterlüftung, Wärmeleitung durch den Transport von einer Flüssigkeit mittels Versorgungstechnik),
- Verdampfen/Verflüssigen im offenen System (Feuchtigkeiten innerhalb der Konstruktion und an deren Oberflächen, mittels permeabler Rohre der Versorgungstechnik) und
- Verdampfen/Verflüssigen im geschlossenen System
(Wärmetauscheraggregate als Quellen und/oder Senken durch den Transport eines Kühlmittels und/oder Kompressionskältemaschinen und Wärmepumpen).

Diese thermodynamischen Effekte können über Kollektoren zur Wärmeaufnahme und Wärmeabgabe an den Oberflächen sowie mit einer wärmebrückenminimierten Konstruktionsweise in die Heat-Pipes integriert werden. Diese können darüberhinaus an die gebäudetechnischen Komponenten gekoppelt werden. Verteilt über die Fläche, bedienen die Heat-Pipes eine dezentrale Erhöhung des Wärmedurchgangs in der Gebäudehülle.

Durch die Kopplung an die konventionelle Gebäudetechnik kann der Grad der Dezentralisierung weiter erhöht werden. Folgende Maßnahmen erhöhen die Funktionsweise und Effizienz der Heat-Pipes: Um die Wärmeabgabe und Aufnahme der Heat-Pipe Rohre auf die Wärmeleitflüssigkeit zu erhöhen, können deren Oberflächen mittels Ripp- oder Wellprofilen ausgebildet sein. Um den Wärmeübertrag der Heat-Pipes oder deren Wärmekollektoren auf den in den Schalen verlegten Rohrkreislauf zu erhöhen, können diese punktuell oder abschnittsweise mit einem Wärmeleitblech (Kupfer, Aluminium) umwickelt und mit den Heat-Pipe Rohren oder deren Wärmekollektoren verbunden werden. Um die Wärmeabgabe oder Aufnahme der Wärmekollektoren mit der Umgebung (Innen- oder Außenseite) zu erhöhen, können diese zusätzlich an speziell montierte Kühlkörper oder Wärmeabsorptionsmaterialien gekoppelt werden.

Je nach Anwendungsbereich und Verwendungszweck der Gebäudehülle mit steuerbarem Wärmedurchgang muss die Geometrie der Gebäudeoberfläche optimiert werden. Liegt der Fokus auf geringem Heizwärmebedarf, muss die Gebäudearchitektur eine möglichst kleine Gebäudeoberfläche ausbilden. Liegt der Fokus auf geringem Kühlleistungsbedarf, soll die Gebäudeoberfläche maximiert werden. Dasselbe gilt bei Anwendungen für Maschinen und Anlagen. Um eine hohe speicherwirksame Masse ausnutzen zu können, ist Beton und deren Variationen als Baustoff favorisiert. Zusätzlich bietet er gute Eigenschaften im Zusammenhang mit Wärmestrahlung. Die Konstruktion und deren Erweiterungen kann auch in einschaliger Ausführung Verwendung finden.

Die Konstruktionsanschlüsse wie Stöße, Fugen, Übergänge oder Durchdringungen (Leitungen, Rohre, Kabel) haben grundsätzlich die Funktion, einzelne Bauteile untereinander, gegen den Zwischenraum, gegen den Innen- und/oder Aussenraum, gegen den Baustoff oder ein Blech, eine Folie oder einer Dichtungsbahn abzudichten. Dichtheit muss gegen Flüssigkeit erreicht werden. Es ist klar, dass das System, ausgedehnt auf ein ganzes Bauwerk, nie vollständig "dicht" gemacht werden kann. Ziel ist nicht vollständige Dichtheit, sondern eine kontrollierbare, fixe Leckrate, welche mittels des Verfahrens optimiert und minimiert werden kann. Grundsätzlich können handelsübliche Dichtsysteme wie Lippendichtungen oder O-Ringe verwendet werden. Für die Funktionsweise und die Dauerhaftigkeit und Lebensdauer des Systems ist es jedoch zentral, dass die Dichtheit der Konstruktionsanschlüsse auch nachträglich, d.h. nach dem Bau, beeinflusst und verbessert werden kann. Dazu werden Dichtstellen in einer Weise ausgeführt und mit Materialien kombiniert, dass sie von außen beeinflusst und so auf die Dichtheit eingewirkt werden kann. Ein einfaches Beispiel einer Dichtstelle, die von außen nachträglich beeinflusst werden kann, ist z.B. das Anbringen von Bitumen (in Form von Dichtungsbahnen oder Dachpappe) oberhalb einer Nute, Nase oder einfachen Erhöhung zwischen Beton und einem Blech o .ä. Wird das Blech von außen erwärmt, schmilzt nun der Bitumen, fließt in die hohlen Räume, die Nute oder dergleichen und dichtet beim Abkühlen die Dichtstelle neu ab. Dieser Vorgang kann beliebig oft wiederholt werden und ermöglicht so die Kontrolle der Dichtstelle. Der Nachteil bei dieser Lösung ist, dass der Bitumen nur nach unten fließt. Dichtstellen können somit nicht "nach oben" abgedichtet werden. Es drängt sich somit ein Dichtungsmaterial auf, welches unter äußerer Einwirkung sein Volumen richtungsunabhängig vergrößert. Ein Beispiel dazu sind sog. Brandschutzdichtungen in Türen und Fenstern, die ihr Volumen bei Hitzeeinwirkung vergrößern und durch ihre Anordnung im Tür- oder Fensterspalt den Durchtritt von Hitze und Rauch verhindern. Es können z. B. Wärme, elektromagnetische Strahlung, Chemikalien oder mechanische Kräfte als Mittel der äußeren Einwirkung ausgenutzt werden.

Die Einwirkung von Wärme auf die Dichtstelle kann einerseits mittels in die Konstruktion eingebauter Wärmeleitblechen erfolgen, die den Wärmetransport von einer von außen zugänglichen Stelle oder innerhalb der Konstruktion bis hin zur Dichtstelle ermöglichen. Die Einwirkung auf die Dichtstelle erfolgt nun durch Erwärmen des Wärmeleitbleches von außerhalb der Konstruktion oder durch Erwärmen desselben mittels der Wärmeleitflüssigkeit im Zwischenraum oder dem Rohrkreislauf in den Schalen. Anderseits können Heizdrähte in das Dichtungsmaterial integriert werden, die ebenfalls von außerhalb der Konstruktion bedient werden können. In diesem Fall kann sogar eine variable, kontrollierbare Leckrate erreicht werden. Bei der Einwirkung von elektromagnetischer Strahlung muss sichergestellt sein, dass sie, von außen angelegt, nicht durch die Materialien der Konstruktion abgeschirmt wird. Bei der Einwirkung von Chemikalien können entweder feine, permeable Röhrchen in das Dichtungsmaterial integriert werden oder die Chemikalien können direkt in den Zwischenraum der Konstruktion eingebracht werden. Bei all diesen Anwendungen muss die Zyklenfestigkeit für das wiederholte Anwenden sichergestellt sein. Zusätzlich wäre es von Vorteil, wenn das Dichtmaterial bei der Volumenvergrößerung einen Harz o .ä. absondern würde, der aushärtet und so die Dichtstelle weiter verbessert. Dieser Prozess sollte beliebig oft wiederholt werden können. Die verschiedenen Konstruktionsanschlüsse sind nun so ausgeführt, dass eine Einwirkung von außen auf die Dichtstelle möglich ist. Abschließend kann der Abdichtungsprozess in drei Stufen zusammengefasst werden. Zuerst werden die Kontakt- und Dichtflächen zusammengefügt und eventuell verklebt. Daraufhin werden sie unter der Druckeinwirkung des Schalungsdruckes während dem Einbauprozess verbunden (in gewissen Fällen kann auch schon während dem Einbauvorgang auf die Dichtstellen eingewirkt werden). Zum Schluss kann wie oben beschrieben von außen auf die Dichtstellen eingewirkt werden.

Folgende Konstruktionshilfen finden Anwendung: Um zu verhindern, dass die Dichtstellen punktförmig ausfallen, werden diese entweder auf Wärmeleitblechen ausgeführt oder mittels sog. Dichtungs- und Befestigungsrosetten und Lochaussparungen in der Flächendichtung oder dem Blech realisiert. Um Bleche (Wärmeleitbleche, Blenden, Rosetten) im Baustoff zu verankern, werden diese abgewinkelt und mit Löchern versehen oder mit einem Bewehrungsnetz oder Vlies verbunden, damit der Baustoff beim Einbauvorgang diese durchdringt, sich verfestigt und so die Verbindung fixiert.

Die Konstruktionsausführungen beschreiben, wie Fenster, Türen, Durchgänge, Anschlüsse und Durchdringungen wie Leitungen und Rohre einerseits sowie Stufen, Ecken und Abschlüsse anderseits in die Konstruktion integriert werden. Sie zeigen auf, wie die Dichtungsproblematik in jedem einzelnen Fall gelöst wird. Dabei können die verschiedenen Konstruktionsarten (Zwischenraum mit Stützmaterial, als Hohlraum oder gefalztem Stützmaterial ausgebildet) miteinander kombiniert werden. Im Bereich, wo Fenster, Türen oder externe Bauteile an die Konstruktion angeschlossen werden sowie in Ecken und Stufen bietet es sich an, die Konstruktion mit dem porösen, offenporigen Stützmaterial im Zwischenraum auszubilden, da diese Stellen sensitiv bezüglich Wärmebrücken sind. Die Flächen können dann, mit Sektoren unterteilt, beliebig ausgebildet sein. Um eine verbesserte Dichtwirkung zu erzielen, können die Bauteile in konischer Form ausgeführt sein. Der Übergang oder Abschluss der Konstruktion kann geschlossen oder offen in einer Weise ausgebildet sein, dass der Hohlraum auf den ganzen Querschnitt mit einem Abdichtungsrahmen, der eine verminderte Wärmebrücke bildet, abgeschlossen wird.

Es sei hier auf die bauphysikalischen Besonderheiten des Systems eingegangen. Trotz der geringen Stärke der Ausführung (Wand-, Boden- und Deckenstärken), können innerhalb der Konstruktion große Gradienten von Temperatur und Feuchtigkeit aufgenommen werden. Durch Einflussnahme auf die physikalischen Zustände im Zwischenraum kann der Verlauf der Gradienten innerhalb der Konstruktion aktiv beeinflusst werden. Im Falle des Temperaturverlaufs kann grundsätzlich der Wärmedurchgang beeinflusst und gesteuert werden. Dem Dampfdruck kann einerseits mit einer Dampfsperre (Blech, Folie) auf der Innenseite des Zwischenraumes begegnet werden, um das Kondensieren der Feuchtigkeit innerhalb der Konstruktion zu verhindern. Anderseits kann die anfallende Feuchtigkeit innerhalb der Konstruktion absorbiert und mit Hilfe des Systems aktiv hinaus transportiert werden oder für den Wärmehaushalt des Gebäudes ausgenutzt werden. Aufgrund der Anordnung des Zwischenraumes liegt der Taupunkt immer außerhalb des Bereichs, in dem Feuchtigkeit anfällt und auskondensieren könnte. Er schützt somit das System vor Feuchtigkeitsschäden.

Da die Ausführung der Konstruktion auf die Gebäudenutzung und Klimazone ausgelegt wird, beinhaltet sie eine optimierte "Porengröße" des Stützmediums, die von einer Nano-Millimeter-Skala bis hin zum offenen Hohlraum reichen kann. Nebst Poren können dies auch Flächen sein, d. h. der Zwischenraum kann in mehrere Trennschichten aufgeteilt werden. Die konstruktionsbedingten Effekte, wie tiefe Gaswärmeleitfähigkeit bei kleinen Poren oder verbesserte Austauschgeschwindigkeit der Wärmeleitflüssigkeit bei großen Poren, müssen gegeneinander abgeschätzt, abgewogen und optimiert werden.

Das Herstellungsverfahren der Konstruktion und von deren Erweiterungen bedient sich, wie bereits erwähnt, insbesondere eines Baustoffs, der vorgängig lose, fließfähig oder flüssig ist, sich kurz nach dem Einbau in eine formgebende Schalung/Gussform verfestigt und nach einer gewissen Zeit seine volle Festigkeit entwickelt (Pulver, Pellets, Staub, Beton, Kunstharz etc.). Die inneren und äußeren physikalischen Bedingungen des Herstellungsverfahren (Befüllungs-, Abbinde- und Verfestigungsprozess) sind dieselben Bedingungen wie die der flüssigen Phase von Wasser. Der Baustoff soll eine möglichst gute Wärme- und Feuchtigkeitsleitung besitzen. Der Einbringvorgang des fließfähigen Baustoffs kann entweder von oben durch die Schalung/Gussform erfolgen oder von unten hoch gepresst und mittels Schlagschieber verschlossen werden. Dabei wird der fließfähige Baustoff entweder mit einer Pumpe (Betonpumpe) oder mit Hilfe eines Druckausgleichsbehälters mittels hydrostatischen Drucks eingebaut. Das zweite Verfahren kann in gewissen Fällen nötig werden, da das Pumpverfahren während dem Einbringvorgang im fließfähigen Baustoff Druckwellen induziert, die sich negativ auf die Schalung/Gussform auswirken können.

Das einfachste, aber auch aufwendigste Verfahren zur Herstellung der Konstruktion besteht darin, für jede einzelne Schale eine Schalung/Gussform zu bauen, vor Ort oder in Elementbauweise, und diese darauffolgend mit dem Baustoff zu befüllen. Das Ziel ist aber, die Konstruktion und deren Erweiterungen in einem Vorgang/Prozess herzustellen. Dabei stellen sich grundsätzlich zwei Probleme. Einerseits muss mit Hilfe einer Trennschicht zwischen den Schalen der Konstruktion und dem Zwischenraum verhindert werden, dass der Baustoff während dem Einbauvorgang in den Zwischenraum hinein fließt. Um dies zu verhindern, kann diese in vollflächiger Ausführung mit einer Folie, einem Vlies, einem Blech oder einer Flächendichtungsbahn, die sich nachträglich mit dem Baustoff verbindet, ausgeführt werden. Anderseits muss die Trennschicht während dem Einbauvorgang fixiert und stabilisiert werden, da auf sie der hydrostatische Druck des flüssigen Baustoffs einwirkt (Schalungsdruck). Dies wird mit dem gleichzeitigen Einbringen eines Stützmediums während dem Einbauvorgang (Flüssigkeit, Sand, Granulat) im Zwischenraum erreicht. Dabei ist zu beachten, dass die Niveaus des Stützmediums und des flüssigen Baustoffs zu jedem Zeitpunkt auf derselben Höhe liegen. Grundsätzlich muss sich die Materialdichte des Stützmediums in der Größenordnung der Dichte der Flüssigphase des Baustoffs befinden.

Aufgrund von Trägheit, innerer Reibung oder Reibungswiderstand an den Oberflächen können sich Abweichungen in der Dichte des Stützmediums aufdrängen. Handelt es sich beim Stützmedium um einen losen Feststoff, bestimmt nicht die Dichte des Feststoffes, sondern seine Schüttdichte, wie das Herstellungsverfahren durchgeführt wird. Wird eine Stützflüssigkeit verwendet, kann ein Zusatz beigegeben werden, der bei deren Entfernung aus dem Zwischenraum die inneren Oberflächen der Schalen versiegelt. Um den Wärmedurchgang durch die Trennschicht hindurch zwischen den Schalen der Konstruktion und dem Zwischenraum nicht zu beeinträchtigen, sollte diese mit einem Material ausgeführt werden, das einen guten Wärmedurchgang aufweist. Im Folgenden werden verschiedene Herstellungs- und Einbauverfahren vorgestellt.

Im Falle, dass der Zwischenraum mit einem porösen, offenporigen Stützmaterial ausgefüllt wird, besteht die Möglichkeit, vorgängig auf eine Trennschicht zwischen dem Zwischenraum und den Schalen zu verzichten, damit der Baustoff beim Einbauvorgang in die offenen Poren des Stützmaterials einfließen, sich mit diesem verbinden und verfestigen kann. Die Trennschicht zwischen den Schalen der Konstruktion und den offenen Poren des Stützmaterials bildet sich auf der Eindringtiefe des Baustoffs in das Stützmaterial aus. Dabei muss sichergestellt werden, dass der Verbund des Stützmaterials mit dem verfestigten Baustoff die resultierenden Flächenkräfte (Zug, Druck) aufnehmen kann. Da die Trennschicht die Dichtungsfläche zwischen Stützmaterial und Schalen der Konstruktion bildet, muss sie möglichst eine hohe Dichtheit erreichen. Der Bereich an der Oberfläche des Stützmaterials, in welchem der Baustoff eingedrungen ist und sich verfestigt hat, wirkt als feine Bewehrung. Das mit dem ausgehärteten Baustoff durchsetzte Festkörpergerüst verhindert und unterbindet die Rissbildung im erwähnten Bereich. Die Dichtheit der Trennschicht kann weiter erhöht werden, falls dem Beton beliebige Zusätze beigegeben werden (Kunstharz, Silikon, Öl o. ä.). In diesem Fall bestehen zwei Möglichkeiten. Einerseits sollen die chemischen und physikalischen Eigenschaften des Zusatzes (Dichte, Oberflächenspannung) ermöglichen, dass er sich immer an der Oberfläche des fließfähigen Baustoffs befindet. Dringt das Baustoff-Zusatz-Gemisch in die offenen Poren des Stützmediums ein, bildet sich die Trennschicht bei definierter Eindringtiefe an der Flüssigkeitsfront aus. Anderseits kann der Zusatz (Dichte kleiner als die des Baustoffs) während dem Einbauvorgang oben auf den flüssigen Baustoff gegeben werden. Steigt nun bei der Einbringung des flüssigen Baustoffs das Niveau an, benetzt oder fließt zuerst der Zusatz in das Stützmaterial ein, gefolgt vom flüssigen Baustoff. Der Zusatz befindet sich nun wieder an der Flüssigkeitsfront und kann somit auf einer bestimmten Eindringtiefe die Trennschicht durch Aushärten ausbilden. Die Eindringtiefe kann durch die Porengröße des Stützmaterials, den Schalungsdruck oder der Viskosität des flüssigen Baustoffs oder des Zusatzes kontrolliert werden. Falls die Trennschicht auf diese Weise ausgebildet wird, entsteht zusätzlich auch eine erhöhte Dampf- oder Feuchtigkeitsbremse. Um bei tiefen Wärmedurchgangszahlen des Stützmediums auch den Schutz vor Wärmestrahlung zu erhöhen, sollten dem Zusatz feine Metallplättchen (z.B. aus einer Folie oder Aluminium) beigegeben werden, deren Größe kleiner als die Porengröße des Stützmaterials ist. Diese fließen nun mit dem Zusatz als Trägermaterial ebenfalls in das Stützmaterial hinein und werden Teil der Trennschicht. Die von außen auftreffende Wärmestrahlung wird nun an den Metallplättchen gestreut und durch das Material des Zusatzes (Kunstharz) in deren Ausbreitung gedämpft. Dieser Effekt unterbindet das Problem der Ausbildung transversaler Wellenanregungen.

Um zu verhindern, dass der Baustoff zu weit in das poröse, offenporige Stützmaterial im Zwischenraum eindringt, kann dem Baustoff ein abbinde- oder verfestigungsbeschleunigender Zusatz beigegeben werden, der beim Kontakt mit der Oberfläche des Stützmaterials aktiviert wird. Der Zusatz kann auch eine Zweikomponenten-Chemikalie sein. Dabei wird die erste Komponente vorgängig auf das Stützmaterial aufgebracht, wobei beim Einbauvorgang die zweite Komponente mit der ersten in Kontakt kommt, reagiert und aushärten kann.

Im Falle, dass der Zwischenraum als Hohlraum ausgebildet ist, bestehen mehrere Möglichkeiten für dessen Herstellung. Einerseits kann auf die Bewehrung der einen Schale ein festes Stützmaterial vollflächig aufgebracht werden, dessen Stärke der Distanz des Zwischenraumes entspricht. Dieses Stützmaterial hat die Eigenschaft, dass, nach erfolgtem Einbringvorgang des Baustoffs in die Schalung/Gussform, dessen chemische oder physikalischen Eigenschaften in einer Weise von außen verändert werden können, damit es fließfähig oder flüssig wird und auf diese Weise der Zwischenraum vom Stützmaterial entleert werden kann. Es kann dies z.B. ein Wachs o. ä. sein, der durch die Erhöhung der Temperatur in den Schalen herausgeschmolzen werden kann (evtl. kann auch ein Salz oder Eis verwendet werden). Das Stützmaterial kann aber auch ein verdichteter, in Plattenform vorliegender Sand sein, der herausgeschüttelt/vibriert wird oder ein Material (Styropor o. ä.), welches mit einer Flüssigkeit fließfähig gemacht werden kann (herausätzen).

Ein anderes Einbauverfahren erfordert die Möglichkeit, mittels eines fließfähigen Stoffes als Stützmedium auf die Beschleunigung des Verfestigungsprozesses des Baustoffs an der Trennschicht zum Zwischenraum Einfluss nehmen zu können und diesen zu beschleunigen. Dies setzt voraus, dass sich der Baustoff, in der fließfähigen Phase, im Kontakt mit einer verfestigungsbeschleunigenden Flüssigkeit/Stoff (Härter, Abbindbeschleuniger, Verfestigungsbeschleuniger) schneller oder sofort verfestigt. Auf die Bewehrung der Schalen wird nun ein feines Vlies/Netz mit einer kleinen Maschenweite oder Porengröße aufgezogen oder montiert. Die Stützflüssigkeit, welche im Zwischenraum zwecks Ausgleichen des hydrostatischen Druckes des Baustoffs eingebracht wird, ist nun mit dem verfestigungsbeschleunigenden Stoff versetzt. Sie wird beim Einbauvorgang mit derselben Geschwindigkeit wie der fließfähige Baustoff eingebracht. Dabei ist zu beachten, dass das Niveau des Baustoffs zu jedem Zeitpunkt ein wenig über dem Niveau der Stützflüssigkeit liegt. Der fließfähige Baustoff durchdringt nun beim Einbauvorgang das Vlies/Netz und gerät in Kontakt mit der Stützflüssigkeit im Zwischenraum, welche mit dem verfestigungsbeschleunigenden Stoff versetzt wurde. Dabei verfestigt sich der Baustoff im Bereich des Vlies/Netzes und es entsteht somit die Trennschicht des Zwischenraums zur Schale. Beim Einbauvorgang muss beachtet werden, dass die Befüllungsgeschwindigkeit der Abbindegeschwindigkeit des Baustoffs in der Kontaktzone mit der Stützflüssigkeit angepasst wird. Bei Ausführungen von Böden, Wänden und Decken müssen in den Ecken Winkelbleche angebracht werden, um sicherzustellen, dass das Niveau des fließfähigen Baustoffs immer über dem Niveau der Stützflüssigkeit im Zwischenraum steht und keine Durchmischung entsteht. Alternativ kann das Vlies/Netz vorgängig mit der verfestigungsbeschleunigenden Flüssigkeit ("Härter") benetzt oder durchtränkt werden. Beim Einbauvorgang verfestigt sich nun der fließfähige Baustoff beim Durchtritt durch das Vlies/Netz. Das Problem des eben besprochenen Einbauverfahrens im Falle des Hohlraumes liegt darin, dass Stützflüssigkeiten mit geeigneter Dichte schwer oder aufwendig herzustellen sind. Im Gegensatz dazu kann bei grosser Porengrösse des Stützmaterials eine Stützflüssigkeit zur Kontrolle der Eindringtiefe des fliessfähigen Baustoffs in die Poren des Stützmaterials verwendet werden.

Ein alternatives Herstellungsverfahren verwendet ein Granulat (Granulat, Glasperlen o. ä.) als Stützmedium, welches eine geringe Innen- oder Eigenreibung besitzt. In diesem Fall bildet sich die Trennschicht wie oben aus oder es muss zwischen den Schalen und dem Zwischenraum ein Blech, Folie, Vlies oder eine Flächenabdichtung, die sich mit dem Baustoff verbindet, angebracht werden. Zusätzlich kann entweder dem Stützmedium ein Öl o.ä. beigegeben werden, damit das Granulat nicht an der Trennschicht haften bleibt, oder es kann absichtlich in die Trennschicht eingebunden werden. Der Vorteil dieses Verfahrens besteht darin, dass die geeignete Dichte, in diesem Fall die Schüttdichte, einfach zu erreichen ist. Weiter hat ein Granulat den Vorteil, dass es einfach gehandhabt (Pumpen mit Betonpumpe) und nach dem Einbauvorgang gut aus dem Zwischenraum entfernt werden kann.

Wie bereits erwähnt, können die Kleb- und Dichtungsstellen zwischen der Trennschicht und den Konstruktionsanschlüssen durch die Einwirkung des hydrostatischen Druckes des fließfähigen Baustoffs während dem Einbauvorgang, zusätzlich durch Erwärmen der Schalen, verfestigt und abgedichtet werden. Als Alternative zum Granulat als Stützmedium können auch mechanische Hilfsmittel wie aufpumpbare Schläuche oder dergleichen verwendet werden.

Grundsätzlich können drei verschiedene Abläufe zur Herstellung der Konstruktion zur Anwendung gelangen. Einerseits kann sie vollständig in Elementbauweise gefertigt werden, wobei die Größe und das Gewicht der Elemente durch deren Transportfähigkeit bestimmt werden. Der Vorteil des Elementbaus liegt in der guten Kontrolle der Qualität des Herstellungsverfahrens. Der Nachteil sind viele und lange Dichtstellen der Elemente untereinander bei der Montage der Gebäudehülle auf dem Bauplatz, was sich negativ auf die Leckraten auswirkt. Anderseits kann die Konstruktion vollständig auf dem Bauplatz vor Ort montiert und gefertigt werden. Der Vorteil darin liegt in der Reduktion der Anzahl Dichtstellen. Der Nachteil ist die schwierige Kontrolle der Verarbeitungsqualität innerhalb der Gebäudehülle und erschwerte Bedingungen auf dem Bauplatz. Eine dritte Möglichkeit zur Herstellung der Konstruktion ist ein Ablauf, der sich zwischen dem Elementbau und dem Aufbau vor Ort befindet. Dabei wird die Konstruktion in sog. Schalungselementen vorbereitet. Alle Bauteile wie Bewehrung, Trennmaterial, Distanzhalter, Sektorunterteilung, Leitungen und Rohre etc. werden vorgängig auf eine Elementschalung montiert. Diese wird darauffolgend auf dem Bauplatz vor Ort zusammengestellt, gegeneinander abgedichtet und mit dem Baustoff befüllt. Dabei kann die Qualität der Bauteile gut kontrolliert werden, und das Problem der vielen und langen Dichtstellen entfällt, da der Baustoff nun über alle Elemente der Schalung hinweg eingebaut wird.

Die oben besprochenen Herstellungsverfahren erlauben auch eine mehrschalige Ausführung der Konstruktion.

Die Versorgungstechnik, die die Funktion und den Betrieb des Systems bewerkstelligt, besteht einerseits aus Maschinen und Aggregaten, die Flüssigkeiten pumpen und umwälzen ( Flüssigkeits- und Umwälzpumpen). Dazu werden Leitungen und Rohrsysteme benötigt, die mit Ventilen versehen, gesteuert sowie zu- und abgeschaltet werden können. Darüber hinaus werden Messgeräte und Sensoren (Temperatur, Druck, Feuchtigkeit etc.) in die Konstruktion verbaut und in der Umgebung platziert, die Eingangssignale für das Steuerungssystem liefern. Dieses stellt mit Hilfe eines Programms Ausgangssignale bereit, welche dann ihrerseits Stellglieder und Aktoren betreiben. Für die Funktion des Systems ist es von zentraler Bedeutung, ein Transport- und Speichermedium für Wärmekapazität zur Verfügung zu haben. Dies kann Wasser, ein Wassergemisch oder eine beliebige Flüssigkeit sein. Die Versorgungstechnik beinhaltet einerseits Speicherbehälter wie einfache Wasser- und Flüssigkeitsspeicher, welche konventionell in der Gebäudetechnik Verwendung finden. Das Transport- und Speichermedium im Zusammenhang mit Speicherbehältern generiert statische oder bewegliche Kapazitäten von Wärme, welche das System für deren Funktion ausnutzt. Weiter können Apparaturen und Vorrichtungen der Versorgungstechnik an konventionelle gebäudetechnische Anlagen (Heizung, Kühlung, Wärmepumpen etc.) gekoppelt werden und so sich neu ergebende Synergien für den Wärmehaushalt des Gebäudes, Bauwerks, Maschine oder Anlage ausgenutzt werden.

Die Erweiterung der Versorgungstechnik besteht aus permeablen bzw. flüssigkeitsdurchlässigen Rohren. Diese sind stern-, kreis-, spiral- oder schlaufenförmig in den Schalen der Konstruktion, in den Sektorunterteilungen oder dem Stützmaterial im Zwischenraum der Konstruktion angeordnet. Die Rohre, durchströmt mit einer Flüssigkeit, können einerseits Wärmebeträge aus dem sie umgebenden Material zu- oder abführen. Anderseits können sie auch Feuchtigkeiten zu- oder abführen. Um die Wärmeleitfähigkeit des Stützmaterials weiter beeinflussen zu können, kann mit den permeablen Rohren auch Feuchtigkeit zu- oder abgeführt werden.

Die Erweiterung der Versorgungstechnik besteht in einer Vorrichtung, die in die Speicherbehälter (Wasser) eingebaut wird und ermöglicht, bei vorgegebenem konstanten Druck eine große Volumenänderung (zu- oder abfließen) zu ermöglichen. Für die Anwendung im System wird ein Teil der Begrenzungsfläche eines Speicherbehälters (Stirnwand) als Membran ausgeführt, welche mit einer mechanischen Kraftquelle (Federelement) verankert ist. Der Speicherbehälter kann so sein Volumen ändern und dies mit Hilfe der mechanischen Kraftquelle bei konstantem vorgegebenen Druck (z.B. in Abhängigkeit des Kraftverlaufs der Feder). Dies ermöglicht den Austausch eines großen Volumenbetrags des Speichermediums (Flüssigkeit) bei konstantem Druck (befüllen oder entleeren) und wird zum Spülen des Zwischenraumes der Konstruktion verwendet. Im Abschnitt zum Verfahren wird deren Verwendung genauer beschrieben. Die Effizienz der Vorrichtung steht in direktem Zusammenhang mit dem Verhältnis der auszutauschenden Volumina. Die Charakteristik der mechanischen Kraftquelle (Federelement) kann so gewählt und ausgelegt werden, dass sie den Druckunterschied der Flüssigkeitssäule im Bauwerk ausgleicht. Diese drucksteuerbaren Membranspeicherbehälter können auch hydraulisch oder hydropneumatisch ausgeführt sowie parallel oder in Serie aneinander geschaltet werden.

Die Erweiterung der Versorgungstechnik besteht aus einer Vorrichtung, die im Zwischenraum der Konstruktion angebracht wird und es ermöglicht, das Transportmedium für Wärme (Wärmeleitflüssigkeit) über die innere Oberfläche der Schalen im Zwischenraum überströmen zu lassen. Die Vorrichtung beinhaltet einerseits ein Rohrabschlussstück, welches einen gewissen Bereich der Innenfläche abdeckt und die Flüssigkeit gleichmäßig über die Oberfläche verteilt. Anderseits beinhaltet die Vorrichtung ein Auffanggefäß, welches die überströmende Flüssigkeit wieder auffängt. Die Flüssigkeit fließt von oben nach unten über die Oberfläche.

Die Erweiterung der Versorgungstechnik besteht aus einer Vorrichtung zum Einbau von Wärmeaustauschaggregaten im Zwischenraum der Konstruktion; entweder im Hohlraum oder eingebettet im Stützmaterial. Weiter beinhaltet die Erweiterung Vorrichtungen und Anschlüsse, um die Wärmeaustauschaggregate oder die vorgenannten Erweiterungen der Versorgungstechnik an konventionelle gebäudetechnische Anlagen wie Wärmepumpen etc. oder an externe Heiz- und Kühlkreisläufe von Maschinen und Anlagen zu koppeln.

Das Konzept der Heat-Pipes, welches unter der Erweiterung der Konstruktion beschrieben wurde, kann auch unter dem Vorzeichen der Versorgungstechnik im System der dynamischen Wärmedämmung und Wärmeaustausch gehandhabt werden.

Das Verfahren, welches mit Hilfe der Versorgungstechnik die Funktion und den Betrieb des Systems der dynamischen Wärmedämmung und Wärmeaustausch handhabt, führt grundsätzlich folgende Aufgaben aus. Um den Wärmedurchgang durch die Konstruktion hindurch weiter zu erhöhen, kann mit Hilfe von Aggregaten und Vorrichtungen der Versorgungstechnik die Wärmetransport- und Speicherflüssigkeit in den Zwischenraum der Konstruktion eingeleitet und mit dieser befüllt werden, was die Wärmedämmung der Gebäudes verringert. Diese Aufgaben des Verfahrens variieren die Entkopplung des Innenraumklimas mit der Umgebung eines Bauwerks. Das Verfahren wird durch ein Programm gesteuert, welches seinerseits auf die Aggregate und Vorrichtungen der Versorgungstechnik Einfluss nimmt. Dieses Steuerungsprogramm verarbeitet nach festgelegten Routinen die Eingangssignale der Messgeräte und Sensoren in Ausgangssignale, die ihrerseits die Komponenten und Elemente der Versorgungstechnik wie Ventile, Pumpen etc. ansteuern.

Die Steuerung des Verfahrens wird bei der Planung des Gebäudes oder der Anlage wie bereits dargelegt auf die interne Nutzung sowie auf die Klimazone ausgerichtet und optimiert. Weiter kann die Steuerung des Verfahrens Vorhersagen und Modellrechnungen zu Nutzung und Klima, Wetter etc. einbeziehen. Damit können die einzelnen Zustände energieeffizienter ineinander überführt werden.

Das Verfahren kann mit einem Grundzyklus und dessen Erweiterungen beschrieben werden. Der Grundzyklus beginnt mit dem Befüllen mit einer Wärmeleitflüssigkeit. Der Einbring- und Befüllungsvorgang der Flüssigkeit kann mit Pumpen erfolgen. Um wieder in den Ausgangszustand zurückzukehren, wird der Zwischenraum von der Wärmeleitflüssigkeit entleert. Da nach dem Entleeren Restflüssigkeit in Form von Tropfen und Ansammlungen im Zwischenraum zurückbleibt muss zusätzlich eine sog. Spülroutine ausgeführt werden, um diese Restfeuchtigkeit, die einen unerwünschten Einfluss auf die Wärmeleitfähigkeit der Konstruktion ausübt, zu entfernen.

Es ist darauf hinzuweisen, dass die Ausgestaltung des Grundzyklus und dessen Erweiterungen direkt mit der Porengröße des Stützmaterials sowie der Geometrie und Ausgestaltung des Zwischenraums der Konstruktion zusammenhängt. Damit das System allgemeine physikalische und bauphysikalische Effekte für den Wärmehaushalt eines Gebäudes ausnutzen kann, wird das Verfahren über den Grundzyklus hinaus erweitert und variiert.

Dabei werden folgende physikalische Effekte und Gegebenheiten, die sich innerhalb der Konstruktion sowie deren Exposition in der Umgebung (Innenraum und Umgebung) ergeben, ausgenutzt:
a. Phasenverschiebungen, die aufgrund der Wärmekapazität und der speicherwirksamen Masse des Baustoffs innerhalb der Konstruktion und der verschiedenen Sektoren der Gebäudehülle entstehen. Diese können mit Hilfe der Konstruktionserweiterung (in den Schalen der Konstruktion verlegte Rohre, Umwälzung der Wärmetransportflüssigkeit) abgegriffen, überbrückt oder verstärkt werden.
b. Unterschiedliche physikalische Zustände (Temperatur und Druck) und verschiedene Phasen (flüssig, gasförmig) von Stoffen im Stützmaterial oder im Hohlraum der Konstruktion (Flüssigkeit).
c. Phasenübergänge von Stoffen im Stützmaterial oder im Hohlraum der Konstruktion (Flüssigkeit). Grundsätzlich wird dabei die Phasenübergangskurve der Stoffe durch das Steuerungsverfahren abgefahren und die resultierenden Wärmebeträge (Latentwärme) der induzierten Phasenübergänge flüssig - gasförmig für den Wärmehaushalt des Gebäudes ausgenutzt. Der Phasenübergang wird entweder durch einen Temperatur- oder Druckunterschied induziert.
d. Die innerhalb der Konstruktion und der verschiedenen Sektoren entstehenden Gradienten von Temperatur und Feuchtigkeit. Dies wird hauptsächlich mit der Konstruktionserweiterung (Sektorunterteilung) möglich.
e. Die durch das kontrollierte Hineindiffundieren und Entfernen von Feuchtigkeit in der Konstruktion entstehenden Wärmebeträge.

Im Folgenden wird auf die wichtigsten Aspekte des Verfahrens und deren Erweiterungen in Bezug auf die verschiedenen Konstruktionsausführungen und Erweiterungen der Konstruktion eingegangen:
Wie erwähnt, hängt die Bestimmung des Verfahrens von der Ausgestaltung des Zwischenraumes der Konstruktion ab. Zwei prinzipielle Konstruktionsarten, der Zwischenraum mit einem Stützmaterial oder als Hohlraum ausgebildet, sind möglich. Weiter spielen Porengröße und Geometrie bis hin zur Ausgestaltung des Hohlraumes eine Rolle. All diese Aspekte haben einen direkten Einfluss, wie das Steuerungsverfahren aufgesetzt wird und somit, wie und welche Wärme- und Feuchtbeträge für den Wärmehaushalt eines Gebäudes oder einer Anlage ausgenutzt werden können.

Im Falle, dass der Zwischenraum der Konstruktion mit einem porösen, offenporigen Stützmaterial ausgebildet ist, bildet sich die Befüllung mit der Wärmeleitflüssigkeit eher langsam aus. Der limitierende Faktor der Zyklusperiode ist die Porengröße des Stützmaterials. Diese Konstruktionsart bietet sich an, falls der Grundzyklus des Verfahrens eher langsam ausgeführt werden soll und eher Wetter- und Klimaphasen ausgenutzt werden sollen (Zeitskala: mehrere Tage) sowie speziell die Wärmeleitfähigkeit minimiert werden soll.

Im Falle, dass der Zwischenraum der Konstruktion als Hohlraum ausgebildet ist, kann der Grundzyklus des Verfahrens in kürzeren Abständen ausgeführt (Zeitskala: mehrere Stunden) und damit eher Tagesphasen ausgenutzt werden. Der limitierende Faktor der Zyklusperiode ist in diesem Fall die Art und Weise, wie vollständig die Flüssigkeit aus dem Zwischenraum entfernt und entleert werden kann. Es ist klar, dass beim Entleerungsprozess Flüssigkeitsrückstände und Restfeuchtigkeit im Zwischenraum zurückbleiben, als Tropfen und Ansammlungen in Ecken, an den Distanzhaltern, der Heat-Pipes und der Sektoruntertrennung. Um den Entleerungsprozess beschleunigen zu können, müssen die Distanzhalter, die Heat-Pipes sowie die Sektorunterteilung in konkaver oder konischer Form ausgeführt sein oder spezielle Löcher enthalten, die die Entleerung begünstigen. Zusätzlich sollte die Oberflächenspannung der Wärmeleitflüssigkeit mit speziellen Zusätzen oder Einwirkungen von außen reduziert werden, was die Entleerungsgeschwindigkeit ebenfalls erhöhen kann. Diese Konstruktionsart bietet sich an, falls der Grundzyklus des Verfahrens sowie die physikalischen Zustände, Phasen und Phasenübergänge im Zwischenraum in kurzen Abständen zu erfolgen haben.

Falls der Zwischenraum mit einem geschlitzten, gefalzten, porösen oder offenporigen Stützmaterial oder dergleichen ausgeführt ist, können, je nach Oberflächenbehandlung der Trennschicht zu den Schalen hin, zwei oder mehrere unterschiedliche physikalische Zustände im Zwischenraum induziert werden. Dies einerseits aufgrund der räumlichen Anordnung und der Geometrie sowie anderseits aufgrund der Verzögerungen in der Ausbildung der Zustände. Diese Konstruktionsart bietet sich für spezielle Anwendungen an.

Die Erweiterung des Verfahrens bezieht die Erweiterung der Konstruktion (orientierungsabhängige Sektorunterteilung der Gebäudehülle) in den Steuerungszyklus mit ein. Dabei kann der Grundzyklus sowie dessen Erweiterungen in den verschiedenen Sektoren unabhängig voneinander ausgeführt werden und die damit resultierenden Wärmebeträge für den Wärmehaushalt des Bauwerks ausgenutzt werden. Die Ecken und Übergänge innerhalb der Konstruktion können allenfalls mit einer unterschiedlichen Konstruktionsart ausgeführt werden.

Die Erweiterung des Verfahrens bezieht die Erweiterung der Konstruktion (Rohrkreislauf in den Schalen) in den Steuerungszyklus mit ein. Grundsätzlich können dabei durch Wärmeübertrag von den Schalen über die Rohre auf die Wärmetransportflüssigkeit beliebige Wärmemengen innerhalb des Gebäudes verschoben und transportiert werden. Einerseits kann damit die Trägheit des Wärmedurchgangs aufgrund der Wärmekapazität des Baustoffs durch die Konstruktion hindurch umgangen oder beschleunigt werden. Anderseits können, je nachdem, wie viel verschiedene Rohrkreisläufe in einem Bauwerk angeordnet sind, zusätzlich verschiedene anfallende Wärmeunterschiede und Temperaturgradienten in den Schalen der Konstruktion für den Wärmehaushalt des Gebäudes ausgenutzt werden.

Werden permeable Rohre verwendet, kann zusätzlich Feuchtigkeit in der Gebäudehülle zu- oder abgeführt werden. Erfolgt dies innerhalb des Stützmaterials, kann der Wärmedurchgang in demselben erhöht werden. Erfolgt dies in den Schalen der Konstruktion, können die dadurch resultierenden Wärmebeträge (Verschiebung der Phasengleichgewichte) abgegriffen und ebenfalls ausgenutzt werden.

Die Erweiterung des Verfahrens bezieht die Erweiterung der Konstruktion (Heat-Pipes) in den Steuerungszyklus mit ein. Wie bereits erwähnt, basiert die Funktion der Heat-Pipes auf zwei Niveaus der Wärmeleitflüssigkeit in deren unmittelbaren Umgebung im Zwischenraum. Liegt das Niveau unterhalb oder außerhalb der Heat-Pipe Rohre, ist der Wärmeübertrag durch die Wärmeleitflüssigkeit entkoppelt, und es besteht kein zusätzlicher Wärmedurchgang durch die Konstruktion hindurch. Liegt das Niveau der Wärmeleitflüssigkeit nun oberhalb oder innerhalb der Heat-Pipe Rohre, entsteht eine passive Kopplung des Wärmedurchgangs durch den Wärmeübertrag innerhalb der Flüssigkeit von einem Rohr zum anderen und somit ein erhöhter Wärmedurchgang durch die Konstruktion hindurch. Durch die spezielle Anordnung der Heat-Pipes innerhalb der Konstruktion und der einzelnen Sektoren kann durch das Befüllen der Zwischenräume mit der Wärmeleitflüssigkeit der Wärmedurchgang beliebig beeinflusst und gesteuert werden. Die resultierenden Effekte und Wärmebeträge können für den Wärmehaushalt des Bauwerkes ausgenutzt werden.

Die Ausführungen zum weiteren Ausbau des Konzepts der Heat-Pipes im Abschnitt Konstruktion zeigen auf, wie das Steuerungsverfahren um eine Vielzahl von Möglichkeiten erweitert werden kann.

Die Erweiterung des Verfahrens bezieht die Erweiterung der Versorgungstechnik (Überströmen der inneren Oberflächen der Schalen mit einer Flüssigkeit) in den Steuerungszyklus mit ein. Dabei kann ohne erhöhten Wärmedurchgang durch die Konstruktion hindurch der Wärmebetrag der inneren Oberflächen der Schalen abgegriffen, wegtransportiert und für den Wärmehaushalt des Gebäudes ausgenutzt werden. Diese Wärmebeträge könnten auch über den Rohrkreislauf ausgetauscht werden.

Die Erweiterung des Verfahrens bezieht die Erweiterung der Versorgungstechnik (Kopplung von Wärmetauschern im Zwischenraum an WP und Gebäudetechnik) in den Steuerungszyklus mit ein. Das Verfahren steuert in diesem Falle die Kopplung an externe Heiz- und Kühlsysteme (Wärmepumpen, Anlagen und Maschinen). Dabei kann eine spezielle Kühlflüssigkeit, entweder in den Rohren des Rohrkreislaufs oder direkt im Zwischenraum der Konstruktion, für den Austausch der Wärmebeträge ausgenutzt werden.

Die Vielzahl an Freiheitsgraden des Systems, die sich durch verschiedene Konstruktionsarten und Versorgungstechnikkomponenten ergeben, können mit dem Steuerungsverfahren beliebig zusammengefasst und untereinander gekoppelt werden, was dann in einer einzelnen Erweiterung des Verfahrens resultiert. Nebst dem Grundzyklus und dessen Erweiterungen können verschiedene Steuerungsmodi definiert werden. Diese bestehen grundsätzlich aus einem Wärmedämm- und einem Wärmeaustauschmodus. Dabei wird durch das Steuerungsverfahren im einzelnen Fall die Wärmedämmung oder der Wärmeaustausch der Gebäudehülle erhöht. Das Ziel ist die Steuerung und Veränderung der U-Wertbandbreite. Weiter bietet sich eine sog. Spülroutine an, die in einem aktiven Prozess die Feuchtigkeit aus dem Zwischenraum entfernt. Einerseits kann es sich um Feuchtigkeit im Zwischenraum der Konstruktion handeln, die aufgrund von Kondenswasser entstanden ist, oder durch Flüssigkeitsrückstände der Wärmeleitflüssigkeit, die vorgängig aus dem Zwischenraum entfernt wurde, bestehen.

Die Wärmeleitflüssigkeit, die für die Befüllung des Zwischenraums Verwendung findet, sowie die Wärmetransportflüssigkeit, welche im Rohrkreislauf in den Schalen der Konstruktion verwendet wird, können aus derselben oder aber auch aus unterschiedlichen Flüssigkeiten bestehen.

Die Konstruktion, die Versorgungstechnik sowie das Steuerungsverfahren bilden Teile des Gebäudes als System. Die verschiedenen Erweiterungen der Konstruktion, der Versorgungstechnik sowie des Steuerungsverfahrens bilden Systemfreiheitsgrade, welche miteinander gekoppelt, gegeneinander ausgenutzt oder untereinander zusammengeschlossen werden können. Auf diese Weise kann das System der Dynamischen Wärmedämmung und Wärmeaustausch von Bauwerken und Anlagen auf die verschiedensten Weisen resultierende Effekte für den Wärmehaushalt ausnutzen.

Das hier vorgestellte System wird vor der Planung durch eine Validation und Systemauslegung energietechnisch optimiert. Die zu betrachtenden Grössen sind Nutzung und Klimaexposition des Gebäudes einerseits mit der Bestimmung der nötigen Zustände und Steuerzyklen sowie anderseits die angestrebte U-Wert Bandbreite, welche, abhängig von der Wärmeleitfähigkeit der einzelnen Konstruktionsteile, durch die Relation von Porengrösse des Stützmaterials im Zwischenraum (bis zur Ausgestaltung als Hohlraum) und innerem Druck bestimmt wird.

### Kurze Beschreibung der Zeichnung

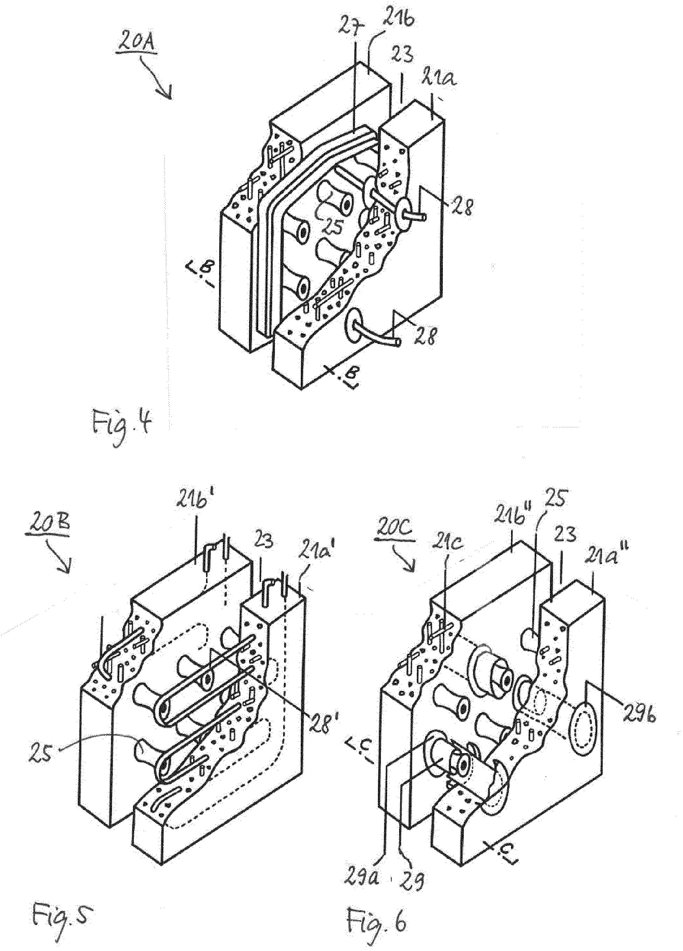

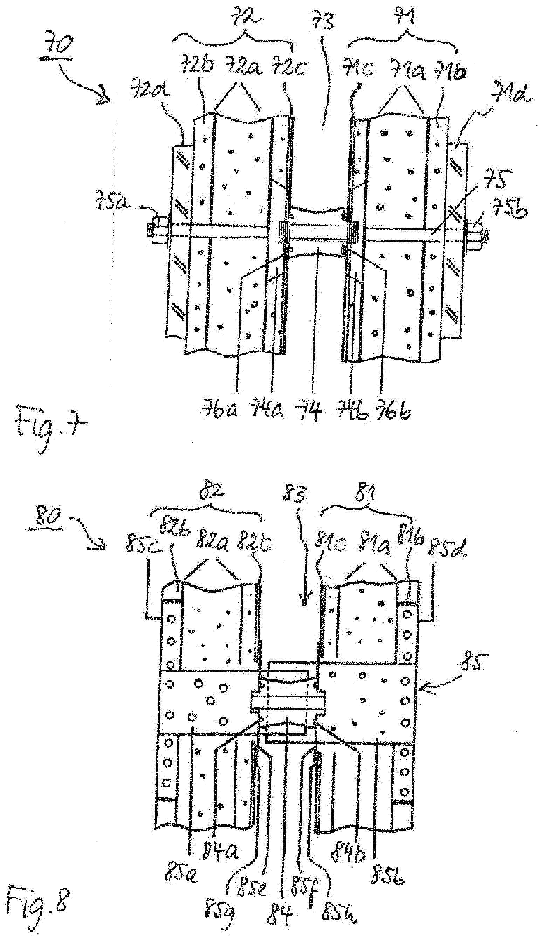

Die erfindungsgemäße Gebäudehülle umfasst Fluidzuführungs- und -abführungsmittel und Dichtmittel. Keine der Zeichnungen zeigt alle diese Elemente zusammen. Figur 4 zeigt jedoch eine Gebäudehülle mit Fluidzuführungs- und -abführungsmitteln und Figuren 7, 8, 8a-c und 14a-c zeigen Dichtmittel. Die übrigen Figuren helfen, weitere Aspekte der Erfindung zu verstehen.
- Fig. 1: eine teilweise geschnittene perspektivische Darstellung einer zweischaligen Gebäudewand,
- Fig. 2: eine weitere teilweise geschnittene perspektivische Darstellung einer zweischaligen Gebäudewand,
- Fig. 3: eine weitere teilweise geschnittene perspektivische Darstellung einer zweischaligen Gebäudewand,
- Fig. 4: eine teilweise geschnittene perspektivische Darstellung einer zweischaligen Gebäudewand mit Fluidzuführungs- und -abführungsmitteln,

- Fig. 5: eine teilweise geschnittene perspektivische Darstellung einer zweischaligen Gebäudewand,

- Fig. 6: eine teilweise geschnittene perspektivische Darstellung einer zweischaligen Gebäudewand,

- Fig. 7: eine schematische Querschnittsdarstellung einer Gebäudehülle gemäß mit einem Dichtelement,

- Fig. 8: eine schematische Querschnittsdarstellung einer Gebäudehülle mit einer Dichtung,

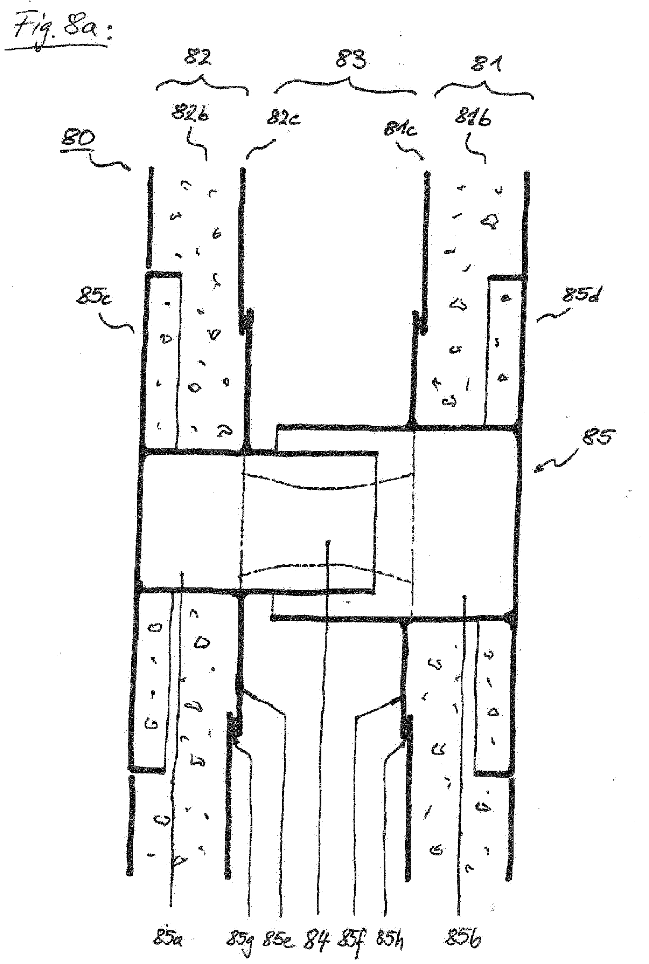

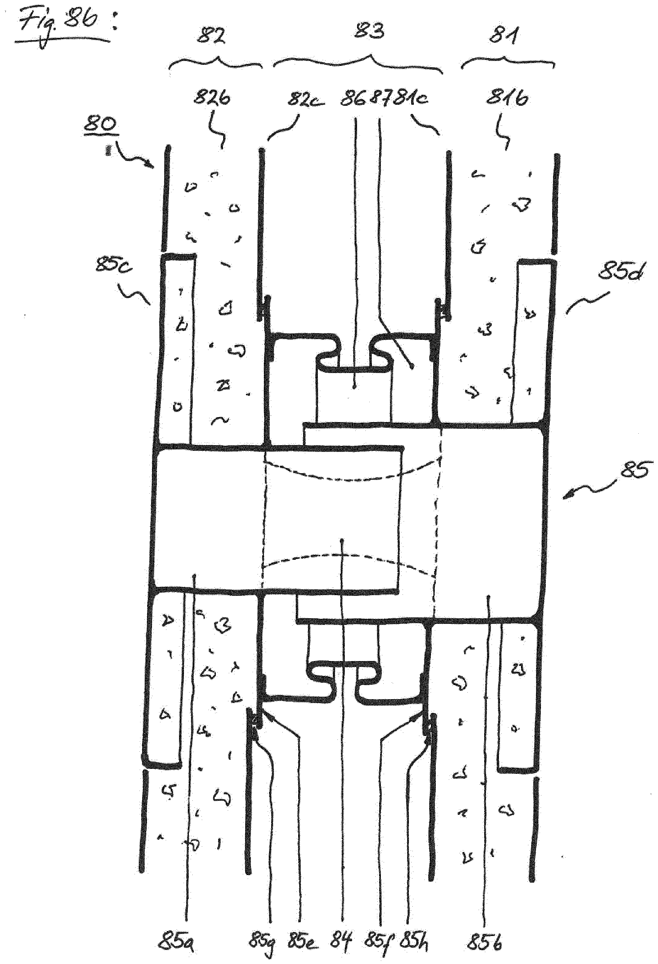

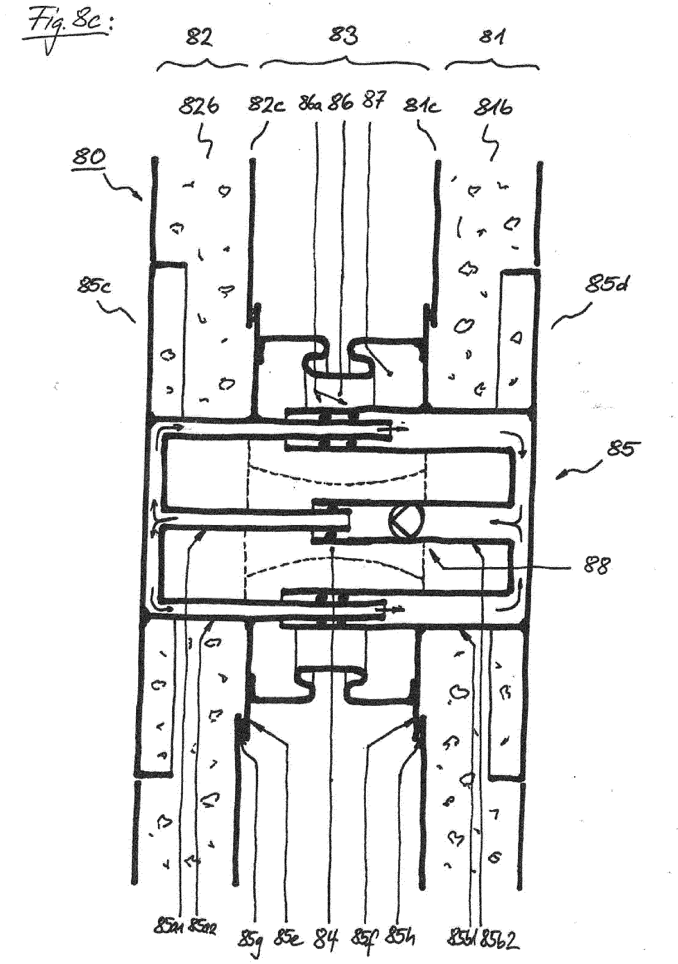

- Fig. 8 a: eine vereinfachte schematische Querschnittsdarstellung der Ausführungsform der Gebäudehülle gemäß Fig. 8
- Fig. 8 b: eine schematische Querschnittsdarstellung mit einer Dichtung,

- Fig. 8 c: eine schematische Querschnittsdarstellung einer Gebäudehülle mit einer Dichtung,

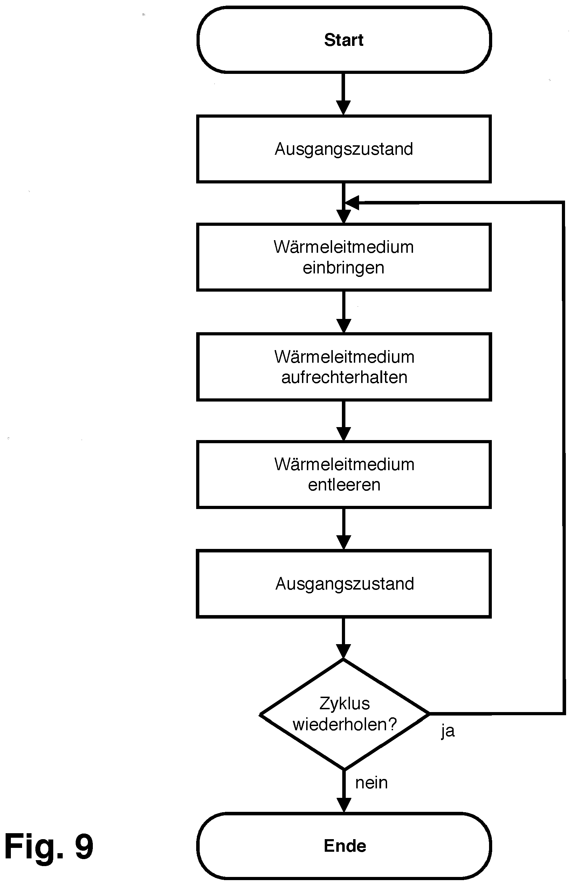

- Fig. 9: schematische Darstellungen zur Illustration von Ausführungen des erfindungsgemäßen Verfahrens.

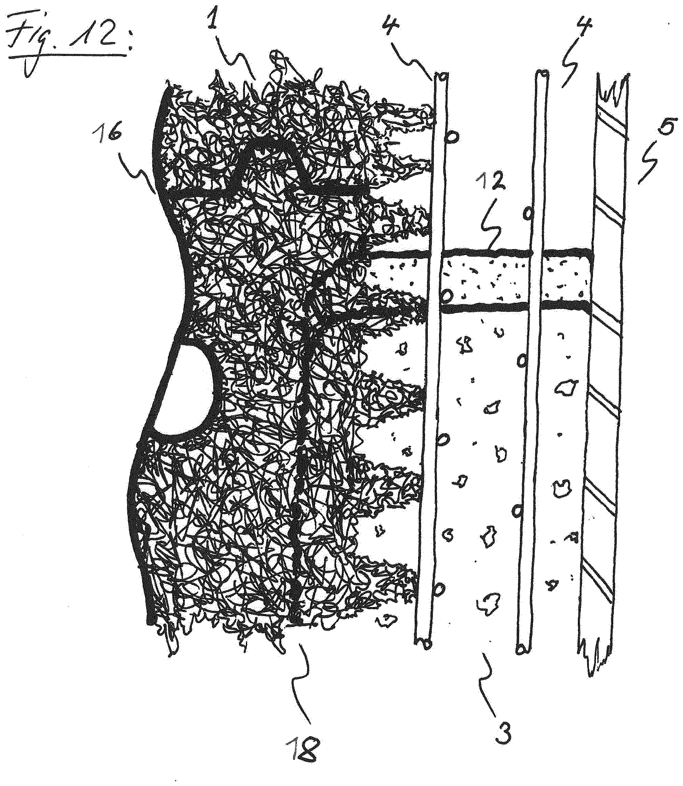

- Fig. 12: ein schematischer Ausschnitt eines Querschnitts einer Gebäudehülle während der Herstellung

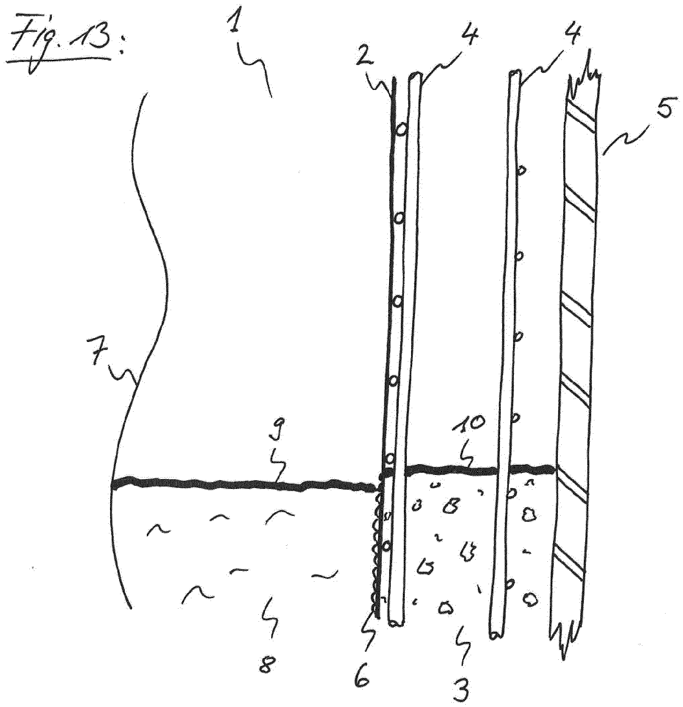

- Fig. 13: ein schematischer Ausschnitt eines Querschnitts der Gebäudehülle in einer alternativen Herstellung

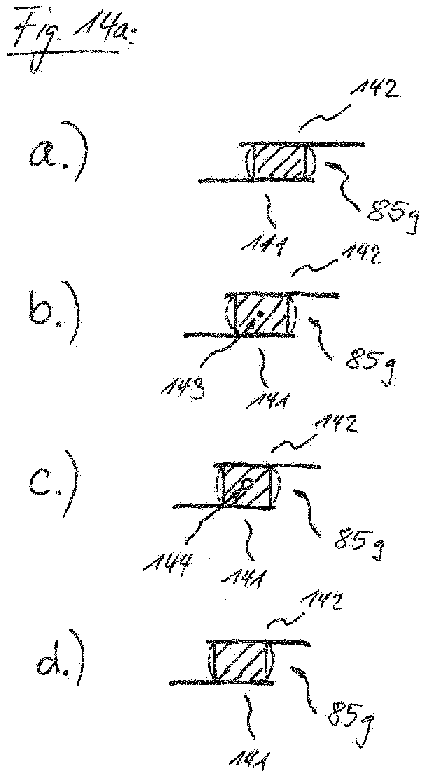

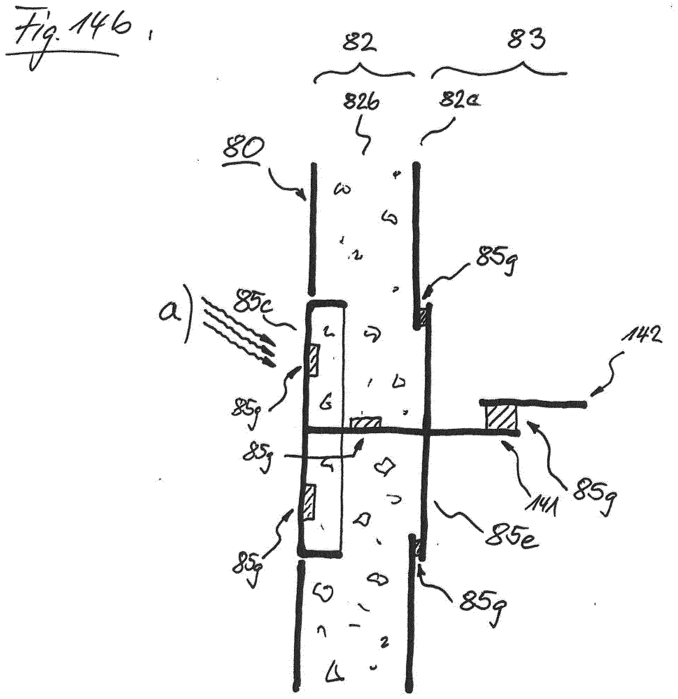

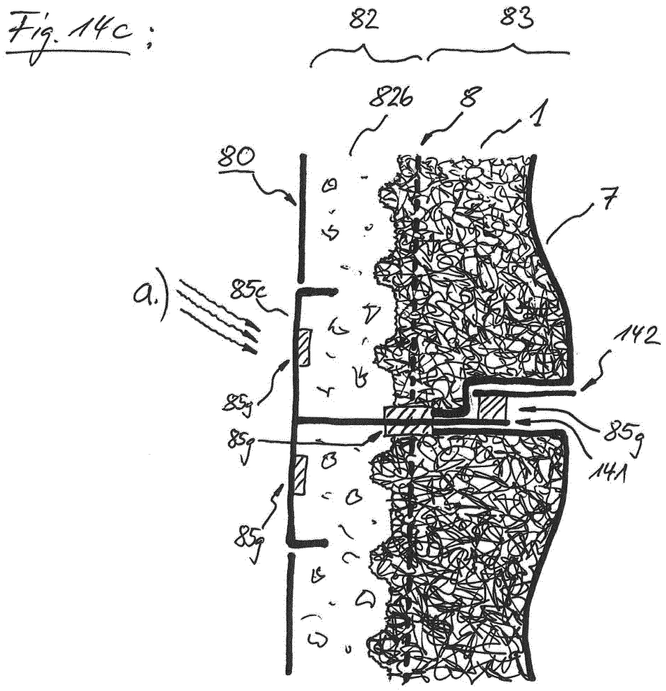

- Fig. 14 a: verschiedene schematische Darstellungen von Dichtungen
- Fig. 14 b: schematische Darstellung eines Ausschnitt eines Querschnitts einer Gebäudehülle
- Fig. 14 c: schematische Darstellung eines Ausschnitts eines Querschnitts einer Gebäudehülle.

### Weg zur Ausführung der Erfindung

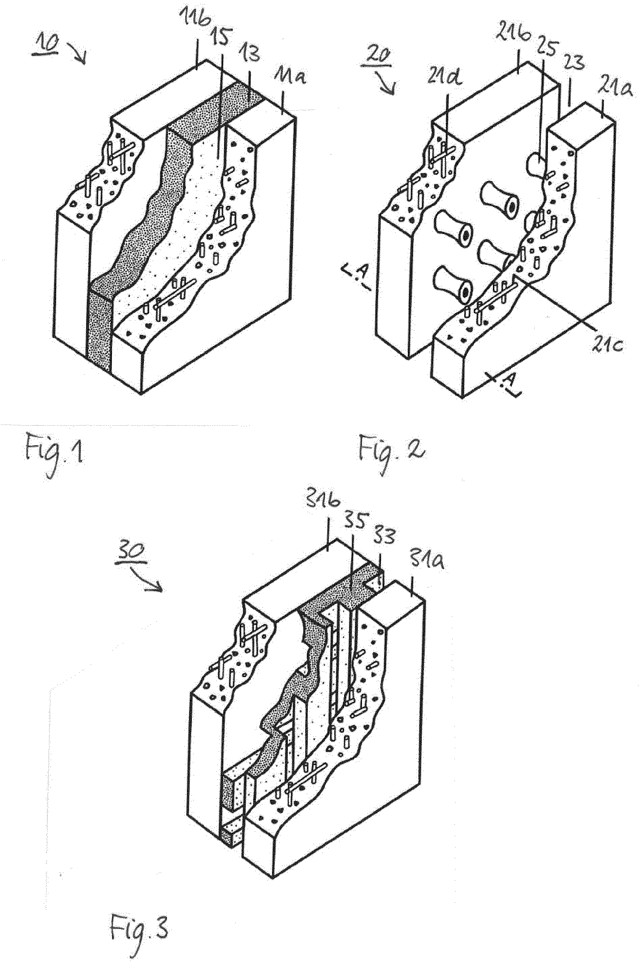

Fig. 1 bis 3 zeigen schematisch in teilweise geschnittenen Querschnittsdarstellungen jeweils eine zweischalige Gebäudehülle 10, 20 bzw. 30, die jeweils eine erste und zweite Wandschale 11a, 11b; 21a, 21b bzw. 31a, 31b mit vorbestimmten Abstand voneinander aufweisen, die einen Zwischenraum 13, 23 bzw. 33 zwischen sich einschließen. In der dargestellten Ausführung der Wandschalen weisen diese jeweils eine Bewehrung auf, die lediglich in Fig. 2 mit den Ziffern 21c, 21d gesondert bezeichnet ist.

Bei der Gebäudehülle 10 nach Fig. 1 ist der Zwischenraum 13 mit einem porösen, offenporigen Dämm- oder Stützmaterial 15 ausgefüllt, welches auch in Plattenform eingebracht und dann zugleich eine Abstützfunktion hinsichtlich der Wandschalen 11a, 11b haben kann. Bei der Gebäudewand 20 nach Fig. 2 ist der Zwischenraum 23 im Wesentlichen leer, abgesehen von einer Vielzahl von Distanzhaltern 25, die die Wandschalen 21a, 21b auf über die Abmessungen der Gebäudewand konstantem Abstand halten. Die Gebäudewand 30 nach Fig. 3 enthält im Zwischenraum 33 geschlitzte oder gefälzte Platten 35 aus porösem, offenporigen Stützmaterial.

In den Figuren 4 bis 6 sind jeweils schematisch Gebäudehüllen dargestellt, wobei von den oben beschriebenen Konstruktionen gemäß Fig. 2 ausgegangen wird und die gleichen Elemente mit den gleichen Bezugsziffern wie in Fig. 2 bezeichnet. Im Zwischenraum 23 der Konstruktion sind gemäß Fig. 4 verschiedene Abschnitte durch Trennwände 27 voneinander fluiddicht abgetrennt, und die einzelnen (nicht gesondert bezeichneten) Abschnitte sind mit separat steuerbaren Rohrleitungen 28 zum Ein- oder Ausbringen eines Fluids und zur Steuerung des Wärmedurchgangs oder Wärmetransports durch die Gebäudehülle 20A in jedem der Abschnitte versehen.

Fig. 5 zeigt als weiteres Ausführungsbeispiel eine Gebäudehülle 20B, bei der beide Wandschalen zu thermisch steuerbaren oder, etwa als Wärmekollektoren, nutzbaren Wandschalen 21a', 21 b' modifiziert sind, in denen Rohrschlangen 28' zum Hindurchleiten einer Heiz- oder Kühlflüssigkeit angeordnet sind. Fig. 6 zeigt eine Gebäudehülle 20c, in der eine Vielzahl von jeweils einem Distanzelement 25 zugeordneten, voneinander beabstandeten Wärmerohren 29 angeordnet ist, die zwischen den beiden (durch das Vorsehen von Mitteln zur Anbringung der Wärmerohre modifizierten) Wandschalen 21a", 21b" verlaufen und denen an der Wand-Innenseite jeweils eine Dichtungs- und Befestigungsrosette 29a und auf der Außenoberfläche der äußeren Schale 21a" jeweils ein Wärmekollektorelement 29b zugeordnet ist. Fig. 7 und 8 zeigen, jeweils in gegenüber den Prinzipskizzen nach Fig. 4 bis 6 etwas detaillierteren Querschnittsdarstellungen, weitere Einzelheiten der Erfindung.

Fig. 7 zeigt einen Ausschnitt einer Gebäudewand 70 des in Fig. 2 gezeigten Grundtyps, also einen zweischaligen Wandaufbau mit Distanzhaltern. Angesichts der größeren Detailliertheit dieser Darstellung wird hier nicht auf die Bezugsziffern von Fig. 2 zurückgegriffen, sondern die beiden Wandschalen sind mit Ziffer 71 bzw. 72 bezeichnet, der zwischen ihnen gebildete, im Wesentlichen leere Zwischenraum mit Ziffer 73 und der Distanzhalter mit Ziffer 74. Beide Wandschalen 71, 72 umfassen jeweils eine Bewehrung 71a, 72a, in einem Baustoff 71b, 72b, Innenbeschichtung 71c, 72c und schließlich eine äußere Schalung oder Gussform 71d, 72d. im Bereich des Distanzhalters sind auf dem jeweiligen Wandkern Verankerungskörper 74a, 74b angebracht, und der Distanzhalter und die Verankerungskörper sind von einem Schalungsanker 75 durchdrungen, der beidseits mit je einer Spannmutter 75a, 75b fixiert ist. Im Bereich des Distanzhalters 74 sind einerseits ein normaler O-Ring 76a und andererseits ein unter äußerer Energieeinwirkung (Wärme, Strahlung o. ä.) volumen-vergrößerndes Dichtelement 76b zur Abdichtung des Zwischenraumes 73 nach innen und außen im Bereich der Durchdringung der Schalen 71, 72 durch den Schalungsanker 75 dargestellt.

Funktion, technische Realisierungsmöglichkeiten und Vorteile der vorstehend kurz beschriebenen Gebäudewandkonstruktion sind weiter oben genauer erläutert und Gegenstand der anhängenden Ansprüche und werden daher hier nicht nochmals detailliert beschrieben. Wie oben genauer erläutert, kann bei nachlassender oder aufgrund relevanter Zustandsgrößen nicht mehr hinreichend gegebener Dichtwirkung des Dichtelementes 76b diese Dichtwirkung durch äußeren Energieeintrag wieder auf das erforderliche Maß gebracht werden.

Fig. 8 zeigt eine weitere zweischalige Gebäudehülle 80. Dieser Aufbau ähnelt grundsätzlich demjenigen der Gebäudewand 20C nach Fig. 6, auch hier wird bei der Zuweisung von Bezugsziffern jedoch keine Bezugnahme auf Fig. 6 angestrebt. Zwei Wandschalen 81, 82, die einen Zwischenraum 83 zwischen sich einschließen, sind auch hier durch Distanzhalter 84 in definiertem Abstand gehalten. Die Wandschalen 81, 82 weisen jeweils wieder eine Bewehrung 81a, 82a im Baustoff 81b, 82b auf und haben innenseitig jeweils eine TrennBeschichtung 81c, 82c. Im Bereich des Distanzhalters, und diesen umgebend, ist eine aus einem etwas engeren Innenrohr 85a und einem zu diesem konzentrischen, etwas weiteren Außenrohr 85b bestehende Heat-Pipe 85 vorgesehen. Das Innen- und Außenrohr 85a, 85b der Heat-Pipe 85 durchsetzen jeweils die gesamte Dicke der Wandschale 82 bzw. 81, in der sie angeordnet sind, und ragen einander überlappend in den Innenraum 83.

Jedes der Teilrohre 85a, 85b ist auf der jeweiligen Wandaußenseite der Schale 82 bzw. 81 mit einem Wärmekollektor 85c bzw. 85d versehen. Innenseitig ist jedem der Teilrohre 85a, 85b eine Rosette 85e bzw. 85f zugeordnet, und jede Dichtungs- und Befestigungsrosette ist gegenüber der angrenzenden Innenwandbeschichtung der jeweiligen Wandschale mit einer volumenvergrößernden Dichtung 85g bzw. 85h der im vorstehenden Abschnitt erwähnten Art und Funktion versehen. Auch die bereits in Fig. 7 gezeigten Dichtungen (O-Ring bzw. volumen-vergrößernde Dichtung) am Distanzhalter gibt es bei dieser Ausführung; sie sind hier mit Ziffer 84a bzw. 84b bezeichnet.

Fig. 8 a ist eine vereinfachte Darstellung der Ausführungsform gemäß Figur 8 zur weiteren Erläuterung der wesentlichen Merkmale.

Die Teilrohre 85a, 85b sind (in einem vorbestimmten Abstand) konzentrisch angeordnete und ineinander geführte Rohre. Wie man Fig. 8a entnehmen kann berühren sich die Teilrohre 85a und 85b nicht und ragen nur zu einem gewissen Teil in den Zwischenraum 83 hinein. Die Teilrohre 85a, 85b können aus einem gut wärmeleitenden Material wie Aluminium, Kupfer oder Chromstahl gefertigt sein. Die Wärmekollektoren 85c, 85b (vorzugsweise gefertigt aus einem wärmeleitenden Blech) sind an der Außenseite der Konstruktion angeordnet und stehen im direkten Austausch mit der unmittelbaren Umgebung und können die Wärme von direkter Sonneneinstrahlung an das mit ihnen verbundene, in die Schalen und den Zwischenraum x 82 hineinragende Teilrohr weiterleiten. Solange der Zwischenraum 82 evakuiert ist, besteht keine wärmeleitende Verbindung zwischen den Teilrohren 85a, 85b. Wird nun der Zwischenraum 83 mit einer Wärmeleitflüssigkeit befühlt, entsteht dadurch ein erhöhter Wärmeübertrag von einem Teilrohr 85a auf das andere Teilrohr 85b. Dadurch wird eine passive Wärmebrücke innerhalb der Konstruktion gebildet und der Wärmedurchgang (erheblich) erhöht. Insgesamt überbrückt die Heat-Pipe 85 den Zwischenraum 83 zwischen den Wandschalen 81, 82 und insbesondere den Trennschichten 81 bzw. Beschichtungen 81c, 82c. Wird die Wärmeleitflüssigkeit nun wieder aus dem Zwischenraum 83 entleert, entfällt die zusätzliche Wärmeübertragung innerhalb der Konstruktion. Da sich die Teilrohre 85a, 85b nicht berühren, liegt auch keine Wärmebrücke innerhalb der Konstruktion mehr vor (bei entleertem Zwischenraum 83).

Die Funktion der Teilrohre 85a, 85b ist also abhängig von zwei Niveaus einer Wärmeflüssigkeit im Zwischenraum 83. Liegt das Niveau unterhalb der Teilrohre 85a, 85b (bzw. der Heat-Pipe 85) besteht keine erhöhte Wärmeleitung. Liegt das Niveau oberhalb der Heat-Pipe 85 liegt eine erhöhte Wärmeleitung vor.

Der Distanzhalter 84 kann in Verbindung mit der Heat-Pipe 85 ausgeführt sein.

Die Figur 8b zeigt eine alternative Ausführung einer Gebäudehülle. Grundsätzlich ist die Ausführungsform gemäß Figur 8b wie die Ausführungsform gemäß Figur 8a ausgebildet. Zusätzlich ist um die Teilrohre 85a, 85b eine Trennwand 86 vorgesehen. Die Trennwand 86 ist im konkretem Fall (andere Strukturen sind möglich) als ein Zylinder um die Heat-Pipe 85 herum ausgebildet. Die Trennwand 86 ist an Dichtungs- und Befestigungsrosetten 85e, 85f befestigt und wird durch diese abgedichtet. Die (zylindrische) Trennwand 86 definiert ein Flüssigkeitsreservoir 87, in das Wärmeflüssigkeit eingebracht werden kann (und wieder entfernt werden kann). Ein Querschnitt der Trennwand 86 ist doppel-S-förmig. Im konkreten Ausführungsbeispiel kann die Trennwand 86 einen zentralen Abschnitt aufweisen, der gegenüber Randabschnitten radial nach innen versetzt ist.

Figur 8c zeigt eine weitere Ausführungsform einer Gebäudehülle. Diese Ausführungsform weist grundsätzlich die Struktur der Ausführungsform gemäß Figur 8b, insbesondere betreffend die Trennwand 86 auf. Die Heat-Pipe 85 ist jedoch unterschiedlich zur Ausführungsform gemäß Figur 8b ausgebildet. In der Ausführungsform gemäß Figur 8c umfasst das Teilrohr 85a einen Teilrohr-Abschnitt 85a1 und einen Teilrohr-Abschnitt 85a2, der (konzentrisch) um den Teilrohr-Abschnitt 85a1 angeordnet ist. Die Teilrohr-Abschnitte 85a1, 85a2 ragen jeweils in den Zwischenraum 83 hinein und sind (teilweise) innerhalb von Teilrohr-Abschnitten 85b1, 85b2 des zweiten Teilrohrs 85b angeordnet. Ein Abstand zwischen den Teilrohr-Abschnitten 85a1 sowie 85b1 und 85a2 sowie 85b2 wird durch Dichtelemente 86a abgedichtet, so dass die Teilrohre 85a, 85b fluiddicht miteinander verbunden sind. In dem Teilrohr-Abschnitt 85b2 ist eine Flüssigkeitspumpe 88 vorgesehen, die einen Flüssigkeitskreislauf gemäß den Pfeilen in Figur 8c realisiert.

Die Ausführungsformen gemäß den Figuren 8a, 8b nutzen eine passive Wärmeleitung. Die Ausführungsform gemäß Figur 8b ist insbesondere dann vorteilhaft, wenn der Zwischenraum 83 evakuiert ist oder mit einer porösen, offenporigen Dämm-/Stützmaterial aufgefüllt ist.

Die Ausführungsform gemäß Figur 8c arbeitet mit aktiver Wärmeleitung. Dabei wird Flüssigkeit innerhalb der Heat-Pipe 85 vom Wärmekollektor 85c über die doppelwandige Ausführung der Heat-Pipe 85 durch die Konstruktion hindurch zum Wärmekollektor 85d transportiert (und über die Teilrohr-Abschnitte 85b1 und 85a1 in umgekehrter Richtung).

Fig. 9 zeigt schematisch in Art eines einfachen Flussdiagramms, als Ausführungsbeispiel des erfindungsgemäßen Verfahrens, einen Ablauf zur Erreichung eines verwendeten bzw. erhöhten Wärmeaustauschs durch eine Gebäudehülle der oben beschriebenen Art.

Der Zwischenraum der Konstruktion besitzt eine bestimmte Ausgestaltung (poröses, offenporiges Stützmaterial - Hohlraum) und eine bestimmte Geometrie, welche durch die Klimazone und Nutzung gegeben ist. Er ist in einzelne Sektoren unterteilt. Der Schritt "Ausgangszustand" gleicht die physikalischen Bedingungen im Zwischenraum entweder mit der Außenumgebung oder mit dem Innenraum aus. Man kann dies auch als "Belüften" bezeichnen. Der Ausgangszustand kann auch innerhalb der Prozessabfolge eingefügt werden, um den Zwischenraum für die nachfolgenden Prozesse vorzubereiten.

Der Schritt "Wärmeleitmedium einbringen" befüllt mittels Pumpen, durch Druckausgleich mit einem Speicher- oder drucksteuerbaren Membranspeicherbehälter den Zwischenraum mit dem Wärmeleitmedium. Dieses kann eine Flüssigkeit sein.

Der Schritt "Wärmeleitmedium leeren" entleert den Zwischenraum mittels Pumpen oder durch Druckausgleich mit einem Speicher- oder drucksteuerbaren Membranspeicherbehälter. Im letzeren Fall schießt sich ein Schritt des Belüftens der Gebäudehülle an. Anschließend wird in einem Entscheidungs-Schritt "Zyklus wiederholen?" anhand des im Zustand der Gebäudehülle mit einem gefüllten Wärmeleitmedium erzielten Wärmeaustauschs einerseits und der bestehenden Sollgrößen und etwa erfasster zusätzlicher Parameter andererseits entschieden, ob und ggfs. zu welchem Zeitpunkt der Zyklus zu wiederholen ist. Falls hierzu keine Notwendigkeit besteht, ist der Ablauf beendet

Die Darstellung im Flussdiagramm ist stark vereinfacht und widerspiegelt nicht die in der Praxis wesentlich komplexeren Abläufe, die sich unter Einfluss verschiedener Mess- und Vergleichsschritte und hierauf beruhender Zwischen-Entscheidungen ergeben können. Derartige Ausgestaltungen liegen aber im Rahmen fachmännischen Handelns und bedürfen hier keiner genaueren Beschreibung.

Die Figuren 12 und 13 zeigen Ausschnitte eines Querschnitts einer Gebäudewand während der Herstellung. In Fig. 12 ist ein Zwischenraum 1 mit einem porösen, offenporigen Dämm-/Stützmaterial 15 ausgefüllt. Ein Zusatzmittel 12 dient der Ausbildung einer Trennschicht. Das Zusatzmittel 12 weist eine geringere Dichte als der Baustoff (z. B. Beton) 3 auf und härtet vergleichsweise schnell aus. Aufgrund seiner geringen Dichte bleibt das Zusatzmittel 12 oberhalb des Baustoffes 3. Das Zusatzmittel 12 durchdringt eine Armierung 4, so dass sich eine Trennschicht 18 in dem Zwischenraum 1 ausbildet. Mit dem Bezugszeichen 5 ist eine Schalung bzw. Gussform gekennzeichnet. Das Dämm-/Stützmaterial kann mehrere Platten umfassen, die über einen Stoß 16 nebeneinander angeordnet sind. Die Trennschicht 18 bildet eine Flächenabdichtung zwischen den im Zwischenraum 1 der zweischaligen Konstruktion ausgeführten Dämm-/Stützmaterial und dem Baustoff 3.

In Fig. 13 ist der Zwischenraum 1 als Hohlraum ausgebildet. Am Armierungsgitter 4 liegt ein feinmaschiges Vlies 2 an. Wenn der Baustoff 3 (in seiner fließfähigen Phase) in Kontakt mit einer Stützflüssigkeit bzw. einem Granulat (versetzt mit abbindebeschleunigendem Zusatz 8) kommt, verfestigt er sich vergleichsweise schnell. Die Flüssigkeit 8 wird bei der Herstellung mit derselben Geschwindigkeit wie der fließfähige Baustoff 3 eingebracht, so dass sich ein Flüssigkeitsniveau 9 der Stützflüssigkeit bzw. des Granulats 8 ein wenig unterhalb des Niveaus 10 des Baustoffs 3 befindet. Mit dem Bezugszeichen 6 ist ausgehärteter Baustoff gekennzeichnet, der das Vlies 2 durchdrungen hat. Das Bezugszeichen 7 kennzeichnet eine Spiegelebene der Abbildung gemäß Fig. 13. Mit dem Bezugszeichen 5 ist eine Schalung bzw. Gussform gekennzeichnet.

Fig. 14a zeigt verschiedene schematische Querschnitte von Dichtungen, deren Volumen geändert werden kann. Die schematische Darstellung unter (a) in Fig. 14a zeigt eine Dichtung 85g, deren Volumen durch Wärmeeinwirkung über Wärmeleitbleche 141, 142 vergrößert werden kann. Das Wärmeleitblech 141 ist beispielsweise ein Wärmeleitblech, das mit der Außenseite verbunden ist. Wärmeleitblech 142 ist beispielsweise ein Wärmeleitblech, das zur Sektorunterteilung im inneren der Konstruktion vorgesehen ist. Gemäß der Ausführungsform nach (b) in Fig. 14a wird das Volumen der Dichtung 85g durch eine Wärmeeinwirkung vergrößert, das aus der Erhitzung eines elektrischen Leiters 143 im inneren der Dichtung 85g resultiert. Unter (c) in Fig. 14a wird die Dichtung 85g durch Einwirkung einer Chemikalie vergrößert, die innerhalb eines (permeablen) Rohrs 144 enthalten ist. Das Rohr 144 ist innerhalb der Dichtung 85g vorgesehen. Unter (d) in Fig. 14a wird das Dichtungsmaterial durch die Einwirkung von elektromagnetischer Strahlung (mit einer vorbestimmten Wellenlänge) vergrößert.

Fig. 14b zeigt einen Ausschnitt eines Querschnitts einer Gebäudehülle mit mehreren Dichtungen 85g. Wie aus Fig. 14b entnommen werden kann, sind die Wärmeleitbleche 141, 142 gegeneinander über eine Dichtung 85g abgedichtet. Weitere Dichtungen 85g sind zwischen Dichtungsrosette 85e und Bewehrung 82a vorgesehen. Noch weitere Dichtungen 85g sind am Wärmekollektor 85c sowie dem Wärmeleitblech 141 angeordnet.

Fig. 14c zeigt einen Ausschnitt eines Querschnitts einer Gebäudewand mit einer Dichtung 85g (beispielsweise für eine Sektorunterteilung) in einem Fall, bei dem der Zwischenraum 83 mit einem porösen, offenporigen Dämm-/Stützmaterial ausgefüllt ist.

Die Ausführung der Erfindung ist nicht auf die oben erläuterten Beispiele und Aspekte beschränkt.

### Bezugszeichenliste

2 Vlies
5 Schalung bzw. Gussform
6 ausgehärteter Baustoff
7 Spiegelebene
8 Stützflüssigkeit bzw. Granulat
9 Flüssigkeitsniveau
10 Flüssigkeitsniveau
10; 20; 30; 70; 80 Gebäudehülle bzw. -wand
11a, 11b; 21a, 21b; 21a', 21b'; 21a"; 21b", 31a, 31b; 71, 72; 81, 82 Wandschale
1; 13; 23; 33; 73; 83 Zwischenraum
15 poröses, offenporiges Material
16 Plattenstoß
4; 21c, 21d, 71a, 72a, 81a, 82a Bewehrung
25; 74; 84 Distanzhalter
27 Trennwand
28; 28' Rohrleitung
29; 85 Wärmerohr
29a; 85e, 85f Dichtungs- und Befestigungsrosette
29b; 85c, 85d Wärmekollektorelement
35 geschlitzte oder gefälzte Platte
3; 71b, 72b; 81b, 82b Baustoff
18;71c, 72c; 81c, 82c Innen- bzw. Trennbeschichtung
71d, 72d Gussform
74a, 74b Verankerungskörper
75a, 75b Spannmutter
76a, 76b; 84a, 84b, 85g, 85h O-Ring, Dichtelement
85a Innenrohr (Wärmerohr)
85b Außenrohr (Wärmerohr)
86 Trennwand (Zylinder)
86 a Dichtelement
87 Flüssigkeitsreservoir
88 Flüssigkeitspumpe

## Patentansprüche

1. Gebäudehülle (10; 20; 30; 70; 80), insbesondere Gebäudewand, Boden oder Dach, eines Gebäudes mit mindestens zwei voneinander beabstandeten Schalen (11a, 11b; 21a, 21b; 21a', 21b'; 21a", 21b"; 31a, 31b; 71, 72; 81, 82), die einen mit Ausnahme von Trage- und/oder Gebäudetechnikelementen im Wesentlichen leeren oder mindestens abschnittsweise mit porösem, offenporigem Material gefüllten, gegenüber dem Außen- und Innenbereich des Gebäudes abgedichteten Zwischenraum zwischen sich einschließen,
mit Fluidzuführungs- und - abführungsmitteln (28; 28') zur gesteuerten Zuführung und Abführung eines den Wärmedurchgang durch die Gebäudehülle beeinflussenden oder einen Wärmetransport in die bzw. aus der Gebäudehülle bewirkenden Fluids in den bzw. aus dem Zwischenraum, wobei der Zwischenraum in Gebäudehüllen-Abschnitte unterteilt ist, und die separat steuerbaren Fluidzuführungs- und -abführungsmittel zur abschnitts-selektiven Steuerung des Wärmetransports ausgebildet sind,
wobei steuerbare Dichtmittel (76b; 84b) zur Abdichtung des Zwischenraums gegenüber dem Außen- und Innenbereich sowie getrennter Gebäudehüllen-Abschnitte voneinander vorgesehen sind,
wobei die Fluidzuführungs- und -abführungsmittel (28; 28') Flüssigkeitspumpen und ein Flüssigkeitsreservoir zum wahlweisen Befüllen des Zwischenraums der Gebäudehüllen-Abschnitte mit einer Wärmeleitflüssigkeit oder zu deren Abpumpen aufweisen.

2. Gebäudehülle nach Anspruch 1, wobei als steuerbare Dichtmittel (76b; 84b) solche vorgesehen sind, die ihr Volumen und/oder ihre Form unter Einwirkung von Wärme, elektromagnetischer Strahlung oder Chemikalien oder mechanischen Kräften in kontrollierter Weise ändern.

3. Gebäudehülle nach Anspruch 1 oder 2, wobei den Gebäudehüllen-Abschnitten separat steuerbare Fluidzuführungs- und -abführungsmittel zur abschnitts-selektiven Steuerung des jeweiligen Wärmedurchgangs zugeordnet und die Gebäudehüllen-Abschnitte fluiddicht voneinander getrennt (27) sind.

4. Gebäudehülle nach Anspruch 3, wobei den getrennten Gebäudehüllen-Abschnitten Sensor- und/oder Eingabemittel zur Erfassung oder Eingabe abschnitts-spezifischer Werte einer wärmetechnisch relevanten Zustandsgröße, insbesondere einer gemessenen oder abgeschätzten Außentemperatur und/oder Sonnenlichtintensität und/oder eines Feuchtgehaltes und/oder Innenraum-Solltemperatur, am jeweiligen Gebäudehüllen-Abschnitt zugeordnet sind, die mit Steuermitteln der Fluidzuführungs- und -abführungsmittel eingangsseitig verbunden sind.

5. Gebäudehülle nach einem der Ansprüche 3 bis 4, wobei im Zwischenraum (23) und/oder mindestens einer der mindestens zwei voneinander beabstandeten Schalen (21a', 21b') ein Rohrleitungssystem (28; 28') zum Durchleiten des den Wärmedurchgang durch die Gebäudehülle beeinflussenden oder einen Wärmetransport in die bzw. aus der Gebäudehülle bewirkenden Fluides vorgesehen ist, welches abschnitts-spezifisch dimensioniert ist und/oder abschnitts-spezifische Flusssteuermittel zur Steuerung des Flusses der Wärmetransportflüssigkeit aufweist.

6. Gebäudehülle nach einem der Ansprüche 3 bis 5, wobei als Gebäudehüllen-Abschnitte die unterschiedlichen Himmelsrichtungen zugeordneten Wände, Böden oder Dach-Abschnitte und/oder Wände, Böden oder Dächer von Räumen mit unterschiedlicher Funktion bestimmt sind.

7. Gebäudehülle nach einem der Ansprüche 3 bis 6, wobei die mindestens zwei voneinander beabstandeten Schalen (21a, 21b; 21a', 21b'; 21a", 21b"; 71, 72; 81, 82) durch eine Vielzahl vom einzelnen Abstandshaltern (25; 74; 84) gegeneinander abgestützt sind, die von dem den Wärmedurchgang durch die Gebäudehülle beeinflussenden oder einen Wärmetransport in die bzw. aus der Gebäudehülle bewirkenden Fluid umspülbar sind und optional in das poröse, offenporige Material eingebettet sind.

8. Gebäudehülle nach einem der Ansprüche 3 bis 7, wobei die Fluidzuführungs- und -abführungsmittel (28; 28') fluid-permeable Rohrabschnitte aufweisen, die zum Rohrwandungs-Durchtritt des den Wärmedurchgang durch die Gebäudehülle beeinflussenden oder einen Wärmetransport in die bzw. aus der Gebäudehülle bewirkenden Fluids ausgebildet sind.

9. Gebäudehülle nach einem der Ansprüche 3 bis 8, wobei im Zwischenraum (13; 23; 33; 72; 83) oder in der mindestens zwei voneinander beabstandeten Schalen (11a, 11b; 21a, 21b; 21a', 21b'; 21a", 21b"; 31a, 31b; 71, 72; 81, 82) den Fluidzuführungs- und -abführungsmitteln zugeordnete, insbesondere an Fluidleitungen angebrachte, Wärmetauschermittel oder Wärmekollektoren vorgesehen sind.

10. Gebäudehülle nach einem der vorangehenden Ansprüche, wobei im Zwischenraum eine Vielzahl von Wärmerohren (29; 85) angeordnet ist, die mit einem Wärmetauschermittel oder einem Wärmekollektor (29b; 85d) auf der dem Außenbereich und Innenbereich zugewandten Schale (21a"; 81) verbunden sind und im Zwischenraum enden.

11. Gebäudehülle nach Anspruch 10, wobei mindestens ein Teil der Wärmerohre (29; 85) und/oder Wärmetauschermittel oder Wärmekollektoren (29b; 85d) mit Mitteln zur Oberflächenvergrößerung, insbesondere Wärmeleitblechen, Rippen, einer Wellenstruktur oder dergleichen, versehen sind.

12. Gebäudehülle nach einem der vorangehenden Ansprüche,
wobei das poröse, offenporige Material auf Zug und Druck mit den mindestens zwei voneinander beabstandeten Schalen verbunden ist.

13. Verfahren zur Steuerung der Innentemperatur in einem Gebäude, mit einer Gebäudehülle nach einem der vorangehenden Ansprüche, wobei mittels Fluidzuführungs- und -abführungsmitteln (28; 28') zur gesteuerten Zuführung und Abführung des den Wärmedurchgang durch die Gebäudehülle beeinflussenden oder einen Wärmetransport in die bzw. aus der Gebäudehülle bewirkenden Fluids in die bzw. aus der Gebäudehülle deren Wärmedurchgang gesteuert oder ein gesteuerter Wärmetransport in die bzw. aus der Gebäudehülle bewirkt wird.

14. Verfahren nach Anspruch 13, wobei die Fluidzuführungs- und -abführungsmittel (28; 28') im Ansprechen auf, insbesondere an der Gebäudehülle, erfasste oder eingegebene Werte einer wärmetechnisch relevanten Zustandsgröße, insbesondere einer gemessenen oder abgeschätzten Außentemperatur und/oder Sonnenlichtintensität und/oder eines Feuchtgehaltes und/oder einer Innenraum-Solltemperatur, gesteuert betrieben werden.

15. Bauwerk mit ortsfester Gründung und einer Gebäudehülle (10; 20; 30; 70; 80) nach einem der Ansprüche 1 bis 12.

## Claims

1. Building envelope (10; 20; 30; 70; 80), in particular a building wall, floor or roof, of a building comprising at least two spaced-apart shells (11a, 11b; 21a, 21b; 21a', 21b'; 21a", 21b"; 31a, 31b; 71, 72; 81, 82), said shells enclosing between them an intermediate space which, with the exception of load-bearing and/or building-technology elements, is substantially empty or is filled with porous, open-pore material at least in some sections and is sealed with respect to the exterior and the interior of the building,
comprising fluid supply and discharge means (28; 28') for supplying to and discharging from the intermediate space, in a controlled manner, a fluid that influences the passage of heat through the building envelope or that transports heat into and/or out of the building envelope, wherein the intermediate space is divided into building envelope sections, and the separately controllable fluid supply and discharge means are designed to control the heat transport in a section-selective manner,
wherein controllable sealing means (76b; 84b) are provided for sealing the intermediate space with respect to the exterior and the interior and also for sealing separate building envelope sections from each other,
wherein the fluid supply and discharge means (28; 28') comprise liquid pumps and a liquid reservoir for selectively filling the intermediate space of the building envelope sections with a heat-conducting liquid or for pumping the latter out therefrom.

2. Building envelope according to claim 1, wherein sealing means which change their volume and/or their shape in a controlled manner under the effect of heat, electromagnetic radiation, chemicals or mechanical forces are provided as the controllable sealing means (76b; 84b).

3. Building envelope according to claim 1 or 2, wherein the building envelope sections are assigned separately controllable fluid supply and discharge means for controlling the respective passage of heat in a section-selective manner, and the building envelope sections are separated (27) from each other in a fluid-tight manner.

4. Building envelope according to claim 3, wherein the separate building envelope sections are assigned sensor means and/or input means for sensing or inputting section-specific values of a state variable relevant to thermal engineering, in particular a measured or estimated outside temperature and/or sunlight intensity and/or humidity and/or a setpoint inside temperature, on the respective building envelope section, said sensor means and/or input means being connected on the input side to control means of the fluid supply and discharge means.

5. Building envelope according to any one of claims 3 to 4, wherein a pipeline system (28; 28') for conducting the fluid that influences the passage of heat through the building envelope or that transports heat into and/or out of the building envelope is provided in the intermediate space (23) and/or in at least one of the at least two spaced-apart shells (21a', 21b'), said pipeline system being dimensioned in a section-specific manner and/or having section-specific flow control means for controlling the flow of the heat transport fluid.

6. Building envelope according to any one of claims 3 to 5, wherein walls, floors or roof sections assigned to different cardinal directions and/or walls, floors or roofs of rooms having different functions are defined as building envelope sections.

7. Building envelope according to any one of claims 3 to 6, wherein the at least two spaced-apart shells (21a, 21b; 21a', 21b'; 21a", 21b"; 71, 72; 81, 82) are supported relative to each other by a plurality of individual spacers (25; 74; 84), around which the fluid that influences the passage of heat through the building envelope or that transports heat into and/or out of the building envelope can flow, said spacers optionally being embedded in the porous, open-pore material.

8. Building envelope according to any one of claims 3 to 7, wherein the fluid supply and discharge means (28; 28') comprise fluid-permeable pipe sections which are designed to enable the fluid that influences the passage of heat through the building envelope or that transports heat into and/or out of the building envelope to pass through the pipe wall.

9. Building envelope according to any one of claims 3 to 8, wherein heat exchange means or heat collectors, which are assigned to the fluid supply and discharge means and in particular are mounted on fluid lines, are provided in the intermediate space (13; 23; 33; 72; 83) or in the at least two spaced-apart shells (11a, 11b; 21a, 21b; 21a', 21b'; 21a", 21b"; 31a, 31b; 71, 72; 81, 82).

10. Building envelope according to any one of the preceding claims, wherein a plurality of heat pipes (29; 85) are arranged in the intermediate space, said heat pipes being connected to a heat exchange means or a heat collector (29b; 85d) on the shell (21a"; 81) facing toward the exterior and the interior and ending in the intermediate space.

11. Building envelope according to claim 10, wherein at least some of the heat pipes (29; 85) and/or heat exchange means or heat collectors (29b; 85d) are provided with means for enlarging the surface area, in particular heat-conducting plates, ribs, a corrugated structure or the like.

12. Building envelope according to any one of the preceding claims, wherein the porous, open-pore material is connected in tension and compression to the at least two spaced-apart shells.

13. Method for controlling the inside temperature in a building, using a building envelope according to any one of the preceding claims, wherein the passage of heat through said building envelope or the heat transport into and/or out of the building envelope is effected in a controlled manner by means of fluid supply and discharge means (28; 28') for supplying to and discharging from the building envelope, in a controlled manner, the fluid that influences the passage of heat through the building envelope or that transports heat into and/or out of the building envelope.

14. Method according to claim 13, wherein the fluid supply and discharge means (28; 28') are operated in a controlled manner in response to detected or input values of a state variable relevant to thermal engineering, in particular a measured or estimated outside temperature and/or sunlight intensity and/or humidity and/or a setpoint inside temperature, said values being detected or input in particular on the building envelope.

15. Structure comprising a fixed foundation and a building envelope (10; 20; 30; 70; 80) according to any one of claims 1 to 12.

## Revendications

1. Enveloppe de bâtiment (10 ; 20 ; 30 ; 70 ; 80), en particulier mur, sol ou toit d'un bâtiment, avec au moins deux coques (11a, 11b ; 21a, 21b ; 21a', 21b' ; 21a", 21b" ; 31a, 31b ; 71, 72 ; 81, 82), espacées l'une de l'autre qui renferment entre elles un espace intermédiaire sensiblement vide, hormis des éléments de support et/ou d'équipement technique du bâtiment, ou rempli au moins par sections de matériau poreux à pores ouvert, isolé hermétiquement de l'extérieur et de l'intérieur du bâtiment,
avec des moyens d'arrivée et d'évacuation de fluide (28 ; 28') pour l'arrivée et l'évacuation contrôlée dans ou hors de l'espace intermédiaire d'un fluide influant sur la conduction thermique à travers l'enveloppe de bâtiment ou réalisant un transport de chaleur dans ou hors de l'enveloppe de bâtiment, l'espace intermédiaire étant partagé en sections d'enveloppe de bâtiment et les moyens d'arrivée et d'évacuation de fluide qui peuvent être commandés séparément étant conformés en vue d'une commande sélective par sections du transport de chaleur,
dans laquelle des moyens d'étanchéité contrôlables (76b ; 84b) sont prévus pour isoler hermétiquement l'espace intermédiaire de l'extérieur et de l'intérieur et des sections d'enveloppe de bâtiment séparées les unes des autres,
dans laquelle les moyens d'arrivée et d'évacuation de fluide (28 ; 28') comportent des pompes à liquide et un réservoir de liquide pour remplir sélectivement l'espace intermédiaire des sections d'enveloppe de bâtiment avec un liquide caloporteur ou extraire celui-ci par pompage.

2. Enveloppe de bâtiment selon la revendication 1, dans laquelle les moyens d'étanchéité contrôlables (76b ; 84b) peuvent changer de volume et/ou de forme de façon contrôlée sous l'action de la chaleur, du rayonnement électromagnétique ou d'agents chimiques ou de forces mécaniques.

3. Enveloppe de bâtiment selon la revendication 1 ou 2, dans laquelle les sections d'enveloppe de bâtiment sont associées à des moyens d'arrivée et d'évacuation de fluide pouvant être commandés séparément en vue de la commande sélective par sections de la conduction thermique et les sections d'enveloppe de bâtiment sont séparées les unes des autres de façon étanche aux fluides (27).

4. Enveloppe de bâtiment selon la revendication 3, dans laquelle les sections d'enveloppe de bâtiment séparées sont associées à des moyens de détection et/ou de saisie destinés à l'acquisition ou à la saisie de valeurs d'une grandeur d'état ayant une pertinence pour le chauffage spécifiques d'une section, en particulier d'une température extérieure et/ou d'une intensité d'ensoleillement et/ou d'un taux d'humidité et/ou d'une température intérieure de consigne mesurées ou estimées dans la section d'enveloppe de bâtiment correspondante, qui sont connectés du côté de l'entrée à des moyens de commande des moyens d'arrivée et d'évacuation de fluide.

5. Enveloppe de bâtiment selon l'une des revendications 3 à 4, dans laquelle est prévu dans l'espace intermédiaire (23) et/ou au moins une des deux coques (21a', 21b') espacées l'une de l'autre un circuit de tuyauterie (28 ; 28') pour le passage du fluide influant sur la conduction thermique à travers l'enveloppe de bâtiment ou réalisant un transport de chaleur dans ou hors de l'enveloppe de bâtiment, qui est dimensionné de manière spécifique des sections et/ou qui présente des moyens de contrôle de l'écoulement spécifiques des sections pour le contrôle de l'écoulement du liquide caloporteur.

6. Enveloppe de bâtiment selon l'une des revendications 3 à 5, dans laquelle les sections d'enveloppe de bâtiment sont définies comme les murs associés aux différents points cardinaux, les sols ou des sections de toit et/ou des murs, sols ou toit de locaux ayant une fonction différente.

7. Enveloppe de bâtiment selon l'une des revendications 3 à 6, dans laquelle les au moins deux coques (21a, 21b ; 21a', 21b' ; 21a", 21b" ; 71, 72 ; 81, 82) séparées l'une de l'autre sont soutenues l'une contre l'autre par un grand nombre d'éléments d'écartement (25 ; 74 ; 84) qui peuvent être parcourus par le fluide influant sur la conduction thermique à travers l'enveloppe de bâtiment ou réalisant un transport de chaleur dans ou hors de l'enveloppe de bâtiment et qui sont facultativement inclus dans le matériau poreux à pores ouverts.

8. Enveloppe de bâtiment selon l'une des revendications 3 à 7, dans laquelle les moyens d'arrivée et d'évacuation de fluide (28 ; 28') comportent des sections de tuyauterie perméables au fluide qui sont conçues pour que le fluide influant sur la conduction thermique à travers l'enveloppe de bâtiment ou réalisant un transport de chaleur dans ou hors de l'enveloppe de bâtiment traverse la paroi des tuyaux.

9. Enveloppe de bâtiment selon l'une des revendications 3 à 8, dans laquelle sont prévus dans l'espace intermédiaire (13 ; 23 ; 33 ; 72 ; 83) ou dans les au moins deux coques (11a, 11b ; 21a, 21b ; 21a', 21b' ; 21a", 21b" ; 31a, 31b ; 71, 72 ; 81, 82) séparées l'une de l'autre des moyens d'échange de chaleur ou des collecteurs thermiques disposés sur les moyens d'arrivée et d'évacuation de fluide, en particulier appliqués sur des conduites de fluide.

10. Enveloppe de bâtiment selon l'une des revendications précédentes, dans laquelle sont disposés dans l'espace intermédiaire un grand nombre de tuyaux de chauffage (29 ; 85) qui sont reliés à un moyen d'échange de chaleur ou à un collecteur de chaleur (29b ; 85d) sur la coque (21a" ; 81) tournée vers l'extérieur ou vers l'intérieur et qui aboutissent dans l'espace intermédiaire.

11. Enveloppe de bâtiment selon la revendication 10, dans laquelle au moins une partie des tuyaux de chauffage (29 ; 85) et/ou des moyens échangeurs de chaleur ou collecteurs de chaleur (29b ; 85d) sont pourvus de moyens d'augmentation de la surface, en particulier de tôles conductrices thermiques, de nervures, d'une structure ondulée ou similaire.

12. Enveloppe de bâtiment selon l'une des revendications précédentes, dans laquelle le matériau poreux à pores ouverts est relié en traction et en compression avec les au moins deux coques espacées l'une de l'autre.

13. Procédé pour la régulation de la température intérieure d'un bâtiment avec une enveloppe de bâtiment selon l'une des revendications précédentes, dans lequel la conduction thermique de celle-ci est contrôlée ou un transport de chaleur contrôlé dans ou hors de l'enveloppe de bâtiment est réalisé au moyen de moyens d'arrivée et d'évacuation de fluide (28 ; 28') pour l'arrivée et l'évacuation contrôlée du fluide influant sur la conduction thermique à travers l'enveloppe de bâtiment ou réalisant un transport de chaleur dans ou hors de l'enveloppe de bâtiment.

14. Procédé selon la revendication 13, dans lequel les moyens d'arrivée et d'évacuation de fluide (28 ; 28') sont pilotés avec une régulation répondant à des valeurs pertinentes pour le chauffage détectées ou saisies, en particulier sur l'enveloppe de bâtiment, en particulier une température extérieure et/ou une intensité d'ensoleillement mesurée ou estimée et/ou un taux d'humidité et/ou une température de consigne des espaces intérieurs.

15. Ouvrage de construction avec des fondations à demeure et une enveloppe de bâtiment (10 ; 20 ; 30 ; 70 ; 80) selon l'une des revendications 1 bis 12.
